(19) Europäisches Patentamt / European Patent Office / Office européen des brevets

(11) **EP 4 535 508 A1**

(12) **EUROPEAN PATENT APPLICATION**
published in accordance with Art. 153(4) EPC

(43) Date of publication:
**09.04.2025 Bulletin 2025/15**

(21) Application number: **23816114.5**

(22) Date of filing: **31.05.2023**

(51) International Patent Classification (IPC):
*H01M 10/54* (2006.01)    *H01M 10/36* (2010.01)

(52) Cooperative Patent Classification (CPC):
**H01M 10/36; H01M 10/54;** Y02W 30/84

(86) International application number:
**PCT/JP2023/020301**

(87) International publication number:
**WO 2023/234357 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.06.2022 JP 2022089966**
**09.12.2022 JP 2022197051**

(71) Applicant: FUJIFILM Corporation
Tokyo 106-8620 (JP)

(72) Inventor: SHIRATORI, Yosuke
Ashigarakami-gun, Kanagawa 258-8577 (JP)

(74) Representative: HGF
HGF Limited
1 City Walk
Leeds LS11 9DX (GB)

(54) **ACTIVE MATERIAL RECOVERY METHOD**

(57) Provided is a recovery method of an active material for recovering an active material from an all-solid-state secondary battery member including an active material layer which contains the active material and an oxide-based solid electrolyte, the method including bring the all-solid-state secondary battery member into contact with an aqueous medium, and performing solid-liquid separation, in which the oxide-based solid electrolyte includes a solid electrolyte which contains a lithium-containing oxide containing Li, B, and O, a lithium salt, and water, and in the solid electrolyte, a value of a ratio of a content of the lithium salt to a content of the lithium-containing oxide is 0.001 to 1.5 in terms of a molar ratio, and a value of a ratio of a content of the water to the content of the lithium-containing oxide is 1 to 12 in terms of a molar ratio.

FIG. 1

EP 4 535 508 A1

**Description**

**BACKGROUND OF THE INVENTION**

1. Field of the Invention

The present invention relates to a method for recovering an active material from an all-solid-state secondary battery member.

2. Description of the Related Art

In the related art, a liquid electrolyte having high ion conductivity has been used in a secondary battery such as a lithium ion secondary battery. However, since the liquid electrolyte is flammable, there is a problem in safety. In addition, since the organic solvent is liquid, it is difficult to make the battery compact, and there is also a problem of limitation on capacity in a case where the battery is large. On the other hand, an all-solid-state secondary battery using an inorganic solid electrolyte is expected as one of the next-generation batteries in which the above-described problems are solved. Furthermore, in the recent years, an inorganic solid electrolyte exhibiting high ion conductivity comparable to that of the liquid electrolyte has been developed, and performance of the all-solid-state secondary battery has been rapidly improved. Therefore, in addition to mobile devices such as a mobile phone, a laptop computer, and a game device, and various medical devices, the use of the all-solid-state secondary battery has been widely expanded, and electric vehicles equipped with the all-solid-state secondary battery have also been widely spread due to consideration for the environment. As a result, the production amount of the all-solid-state secondary battery is rapidly increasing, and accordingly, the amount of waste of the all-solid-state secondary battery is also increasing year by year.

Meanwhile, the all-solid-state secondary battery contains a resource such as an active material, which contains a rare metal element such as cobalt. An amount of the rare metal element buried is limited. In addition, sustainable environmental awareness has been increasing in recent years. Therefore, there is a demand for a technique for recovering and reusing the resource from the all-solid-state secondary battery.

For example, a technique for recovering a positive electrode active material or a component thereof from the all-solid-state secondary battery or a member thereof has been proposed. Specifically, WO2010/106618A discloses "treatment method of a battery member, the battery member containing at least a positive electrode active material having Li and a sulfide solid electrolyte material having Li, the treatment method including a contact step of generating hydrogen sulfide by bringing the battery member into contact with a treatment liquid to dissolve Li contained in the sulfide solid electrolyte material in the treatment liquid; a positive electrode active material recovery step of recovering the positive electrode active material as an insoluble component from the treatment liquid in which Li has been dissolved; and a Li compound recovery step of recovering an Li compound from the treatment liquid from which the positive electrode active material as an insoluble component has been recovered". In addition, JP2016-033876A discloses "method for recovering a positive electrode active material component from a positive electrode mixture of a solid state battery, the method including a step of applying mechanical energy to a positive electrode mixture containing a positive electrode active material having a coating layer on a surface and a solid electrolyte to increase an exposed surface of the positive electrode active material; and a step of bringing the increased exposed surface of the positive electrode active material into contact with a treatment liquid to dissolve the positive electrode active material component in the treatment liquid".

**SUMMARY OF THE INVENTION**

However, the treatment method disclosed in WO2010/106618A is a method of separating and recovering the sulfide-based solid electrolyte from the positive electrode active material by decomposing the sulfide-based solid electrolyte from an all-solid-state secondary battery using the sulfide-based solid electrolyte as an inorganic solid electrolyte. In the treatment method, since hydrogen sulfide having high toxicity is actively generated, safety measures are required. Therefore, construction of manufacturing equipment, a decrease in work efficiency, and the like lead to an increase in cost, and there is still a concern regarding ensuring safety, which is a significant constraint from the viewpoint of industrial implementation.

On the other hand, in the recovery method described in JP2016-033876A, for the positive electrode mixture in which the sulfide-based solid electrolyte coexists as an inorganic solid electrolyte, the positive electrode active material component can be efficiently recovered by dissolving the sulfide-based solid electrolyte in a dispersion medium. However, the method is a method of recovering the positive electrode active material component at element level, and in order to reuse the positive electrode active material component, it is necessary to convert (synthesize) the recovered element into a predetermined compound again. Therefore, in a case where the recovered positive electrode active material component is reused as the positive electrode active material, a complicated step is required.

Meanwhile, since an oxide-based solid electrolyte has high stability in the air and does not generally generate a toxic substance such as hydrogen sulfide, it is a safe material, and thus research and development of an all-solid-state secondary battery using the oxide-based solid electrolyte are in progress. However, in WO2010/106618A and JP2016-033876A, a method of recovering a positive electrode active material component from a positive electrode mixture in which the oxide-based solid electrolyte coexists as an inorganic solid electrolyte has not been studied. As described above, although various methods of recovering a positive electrode active material from an all-solid-state secondary battery have been known in the related art, a method of recovering a positive electrode active material from an all-solid-state secondary battery using an oxide-based solid electrolyte has not been studied much. This is because, in a case where the oxide-based solid electrolyte is used, it is common that the positive electrode active material is sintered together with the oxide-based solid electrolyte at a high temperature, and it is difficult to efficiently separate and recover the positive electrode active material which is integrated with the oxide-based solid electrolyte by the sintering, from the oxide-based solid electrolyte by a simple operation (step).

An object of the present invention is to provide a method for simply recovering an active material with high recovery efficiency even in a case of a battery member derived from an all-solid-state secondary battery using an oxide-based solid electrolyte.

The present inventor has found that it is possible to form a solid electrolyte layer and an active material layer (layer forming characteristics) in which an oxide-based solid electrolyte which contains a lithium-containing oxide containing Li, B, and O, such as lithium tetraborate, a lithium salt, and water with predetermined proportions is firmly bonded by a pressurization treatment, even in a case where a high-temperature sintering treatment is not performed or even in a case where a binder such as an organic polymer is not blended. As a result of further studies on the oxide-based solid electrolyte, the present inventor has found that the lithium-containing oxide itself, containing Li, B, and O, is slightly water-soluble, and the above-described oxide-based solid electrolyte is a slurry-like aqueous dispersion liquid at a high concentration of solid contents; but the above-described oxide-based solid electrolyte exhibits solubility in water (hereinafter, for convenience, referred to as "water solubility") which cannot be exhibited by the oxide-based solid electrolyte in the related art in a case where the concentration of solid contents is lowered, and thus has a characteristic of forming an aqueous solution or an aqueous dispersion liquid. As a result of further studies based on these findings, the present inventor has found that, in a case where the layer forming characteristics and the water solubility, which are specific characteristics of the above-described oxide-based solid electrolyte, are utilized, an active material can be recovered even from an active material layer containing the above-described oxide-based solid electrolyte, and have conducted various studies. Accordingly, the present inventor has found that, in a case where an active material layer containing the above-described oxide-based solid electrolyte and an active material is brought into contact with water, the active material can be separated and recovered from the above-described oxide-based solid electrolyte by a simple operation (step) with high recovery efficiency and safely even without a special environment. The present invention has been completed by further repeating studies on the basis of the above-described finding.

That is, the above-described object has been achieved by the following method.

<1> A recovery method of an active material for recovering an active material from an all-solid-state secondary battery member including an active material layer which contains the active material and an oxide-based solid electrolyte, the method comprising:

bring the all-solid-state secondary battery member into contact with an aqueous medium; and
performing solid-liquid separation,
in which the oxide-based solid electrolyte includes a solid electrolyte which contains a lithium-containing oxide containing Li, B, and O, a lithium salt, and water, and
in the solid electrolyte, a value of a ratio of a content of the lithium salt to a content of the lithium-containing oxide is 0.001 to 1.5 in terms of a molar ratio, and a value of a ratio of a content of the water to the content of the lithium-containing oxide is 1 to 12 in terms of a molar ratio.

<2> The recovery method according to <1>,
in which the lithium-containing oxide includes amorphous lithium tetraborate.
<3> The recovery method according to <1> or <2>,
in which the solid-liquid separation after bringing the all-solid-state secondary battery member into contact with the aqueous medium is performed in an air.
<4> The recovery method according to any one of <1> to <3>,
in which, by the contact, the oxide-based solid electrolyte is eluted into the aqueous medium and the active material is dispersed in the aqueous medium.
<5> The recovery method according to any one of <1> to <4>,
in which the active material is a positive electrode active material.

<6> The recovery method according to <5>,
in which the positive electrode active material is a positive electrode active material containing a rare metal element.
<7> The recovery method according to any one of <1> to <6>,

in which the all-solid-state secondary battery member is a member derived from a battery laminate including a positive electrode active material layer which contains a positive electrode active material and an oxide-based solid electrolyte or a negative electrode active material layer which contains a negative electrode active material and an oxide-based solid electrolyte,

both the oxide-based solid electrolytes include a solid electrolyte which contains a lithium-containing oxide containing Li, B, and O, a lithium salt, and water, and

in the solid electrolyte, a value of a ratio of a content of the lithium salt to a content of the lithium-containing oxide is 0.001 to 1.5 in terms of a molar ratio, and a value of a ratio of a content of the water to the content of the lithium-containing oxide is 1 to 12.

In the present invention or the specification, in description by indicating a numerical range, in a case where an upper limit value and a lower limit value of the numerical range are described separately, any one of the upper limit value and the lower limit value can be appropriately combined to obtain a specific numerical range. On the other hand, in a case where a numerical range expressed using "to" is described by setting a plurality of numerical ranges, the upper limit value and the lower limit value forming the numerical range are not limited to a specific numerical range before and after "to" in a specific combination, and the upper limit value and the lower limit value of each numerical range can be appropriately combined. In the present invention or the specification, any numerical range expressed using "to" refers to a range including the numerical values before and after the "to" as a lower limit value and an upper limit value, respectively.

With the recovery method of an active material according to the present invention, an active material can be recovered from an all-solid-state secondary battery member in a simple manner and with high recovery efficiency.

The above-described and other features and advantages of the present invention will become more apparent from the following description, appropriately referring to the accompanying drawing.

**BRIEF DESCRIPTION OF THE DRAWINGS**

Fig. 1 is a cross-sectional view schematically showing an example of a configuration of an all-solid-state secondary battery.

Fig. 2 is a diagram showing an example of an X-ray diffraction pattern for describing X-ray diffraction characteristics according to a preferred aspect of a solid electrolyte (I) which is an oxide-based solid electrolyte contained in an active material layer of an all-solid-state secondary battery member used in the present invention.

Fig. 3 is a diagram showing an example of a reduced pair distribution function G(r) obtained from an X-ray total scattering measurement of the solid electrolyte (I) which is an oxide-based solid electrolyte contained in the active material layer of the all-solid-state secondary battery member used in the present invention.

Fig. 4 is a diagram showing an example of a spectrum obtained in a case where a solid $^7$Li-NMR measurement is performed at 20°C or at 120°C for a preferred aspect of the solid electrolyte (I) which is an oxide-based solid electrolyte contained in the active material layer of the all-solid-state secondary battery member used in the present invention.

Fig. 5 is a diagram showing an example of a spectrum obtained in a case where a solid $^7$Li-NMR measurement of a lithium tetraborate crystal is performed at 20°C or 120°C.

Fig. 6 is a diagram showing an example of a spectrum obtained in a case where a solid $^7$Li-NMR measurement is performed at 20°C for a preferred aspect of the solid electrolyte (I) which is an oxide-based solid electrolyte contained in the active material layer of the all-solid-state secondary battery member used in the present invention.

Fig. 7 is a diagram in which a peak shown in Fig. 6 is waveform-separated.

Fig. 8 is a diagram showing an example of a Raman spectrum for a preferred aspect of the solid electrolyte (I) which is an oxide-based solid electrolyte contained in the active material layer of the all-solid-state secondary battery member used in the present invention.

Fig. 9 is a diagram showing a Raman spectrum of a lithium tetraborate crystal.

Fig. 10 is a diagram showing a reduced pair distribution function G(r) obtained by an X-ray total scattering measurement of powdery $Li_2B_4O_7$ crystals.

Fig. 11 is a diagram showing an X-ray diffraction pattern of powdery $Li_2B_4O_7$ crystals.

## DESCRIPTION OF THE PREFERRED EMBODIMENTS

[[Recovery method of active material]]

The recovery method of an active material according to the embodiment of the present invention (hereinafter, also referred to as "method according to the embodiment of the present invention") is a method for recovering an active material as a compound from an all-solid-state secondary battery member including an active material layer which contains the active material and an oxide-based solid electrolyte described later. This method is a method of performing solid-liquid separation after bringing the all-solid-state secondary battery member into contact with an aqueous medium, and specifically, in the step of bringing the all-solid-state secondary battery member including an active material layer formed by the layer forming characteristics of the oxide-based solid electrolyte into contact with an aqueous medium, the oxide-based solid electrolyte is eluted (dissolved or dispersed) into the aqueous medium using the water solubility of the oxide-based solid electrolyte, while the water-insoluble active material is dispersed in the aqueous medium (in a solid state). As a result, the active material present in the active material layer can be separated (isolated) from the oxide-based solid electrolyte in a simple manner and with high recovery efficiency. Furthermore, the method according to the embodiment of the present invention can be safely performed even in the air (environment). The method according to the embodiment of the present invention can also be referred to as a production method of a recovered active material.
The details of the reason are not yet clear, but is considered as follows.
The oxide-based solid electrolyte described later has unique characteristics that cannot be realized by the oxide-based solid electrolyte in the related art, as described above. That is, the oxide-based solid electrolyte exhibits excellent bonding property, and even in a case where a high-temperature sintering treatment is not performed, it is possible to form a constitutional layer (a solid electrolyte layer, an active material layer, and the like) of an all-solid-state secondary battery, in which the oxide-based solid electrolyte itself is firmly bonded to solid particles such as an active material and a conductive auxiliary agent, thereby exhibiting favorable ion conductivity. Therefore, it is considered that, in the constitutional layer formed of the oxide-based solid electrolyte exhibiting such layer forming characteristics, a firmly bound state of the solid particles is released by the contact with the aqueous medium, and the solid particles are likely to collapse or break. Moreover, the oxide-based solid electrolyte exhibits water solubility at a low concentration. Therefore, as the constitutional layer collapses in the aqueous medium, the oxide-based solid electrolyte is eluted (dissolved) into the aqueous medium, and the water-insoluble active material and the like are dispersed in the aqueous medium. By performing the solid-liquid separation, the oxide-based solid electrolyte and the active material and the like can be separated from each other and recovered with a high recovery rate by a simple step of bringing the oxide-based solid electrolyte, the active material, and the like into contact with the aqueous medium and then performing the solid-liquid separation.
As described above, in the present invention, by using the unique characteristics of the layer forming characteristics and the water solubility exhibited by the oxide-based solid electrolyte described later, it is possible to recover the active material in a simple manner and with high recovery efficiency, which cannot be achieved in the all-solid-state secondary battery using an oxide-based solid electrolyte in the related art.

[All-solid-state secondary battery member]

The all-solid-state secondary battery member to which the method according to the embodiment of the present invention is applied is not particularly limited as long as it is a member derived from an all-solid-state secondary battery which includes an active material layer containing an active material and the oxide-based solid electrolyte described later; and an aspect of the member is not particularly limited. Examples thereof include the all-solid-state secondary battery itself, a constituent member of the all-solid-state secondary battery, and a manufacturing material of the all-solid-state secondary battery. Examples of the constituent member of the all-solid-state secondary battery include each constitutional layer constituting the all-solid-state secondary battery and a battery laminate of a plurality of constitutional layers; and examples of the manufacturing material of the all-solid-state secondary battery include a composition (slurry) for forming the constitutional layer. Examples of the battery laminate include a laminate including an active material layer (a positive electrode active material layer or a negative electrode active material layer); and specific examples thereof include a laminate (a positive electrode laminate or a negative electrode laminate) of a collector and an active material layer (a positive electrode active material layer or a negative electrode active material layer), a laminate of an active material layer (at least one of a positive electrode active material layer or a negative electrode active material layer) and a solid electrolyte layer, and a laminate of the laminate and a collector. The constitutional layer and the laminate are sheet-shaped or striped.
The active material layer included in the all-solid-state secondary battery member may be a positive electrode active material layer or a negative electrode active material layer as long as it contains the active material and the oxide-based solid electrolyte described later, but it is preferably a positive electrode active material layer from the viewpoint that a positive electrode active material containing a rare metal element can be recovered. That is, the active material (also referred to as an electrode active material) to be recovered may be a positive electrode active material or a negative electrode active material; but it is preferably a positive electrode active material, and more preferably a positive electrode active material containing a rare metal element. Examples of the all-solid-state secondary battery member used in a case of recovering the positive electrode active material include a laminate of a positive electrode active material layer alone, a laminate of a positive electrode active material layer and a positive electrode collector, and a laminate of a positive electrode active material layer, a solid electrolyte layer, and a negative electrode active material layer as a laminate of an active material and a solid electrolyte layer.

Here, among the active material layers included in the all-solid-state secondary battery member, the active material layer containing an active material as a recovery target contains the oxide-based solid electrolyte described later. On the other hand, the other active material layer and solid electrolyte layer may not contain the oxide-based solid electrolyte described later as a solid electrolyte, but in consideration of workability of the method according to the embodiment of the present invention, it is preferable to contain the oxide-based solid electrolyte described later. For example, in the laminate of a positive electrode active material layer, a solid electrolyte layer, and a negative electrode active material layer, in a case where any of the constitutional layers contains the oxide-based solid electrolyte described later, a target active material can be recovered in a simple manner and with high efficiency.

In the all-solid-state secondary battery member, the all-solid-state secondary battery, the constituent member, or the like may be used as it is; or a material obtained by destroying, crushing, cutting, or the like may be used. The shape, size, and the like are not particularly limited, but in consideration of the work efficiency, the recovery rate, and the like, an aspect in which a contact area with the aqueous medium is large is preferable, and the shape, size, and the like are appropriately determined.

<All-solid-state secondary battery>

The all-solid-state secondary battery as the all-solid-state secondary battery member is not particularly limited as long as it includes the above-described active material layer, and may be a used all-solid-state secondary battery or an unused all-solid-state secondary battery; and examples thereof include a waste product and an out-of-specification product of the all-solid-state secondary battery.

A configuration of the all-solid-state secondary battery is not particularly limited, but it generally has a configuration in which a positive electrode active material layer, a solid electrolyte layer, and a negative electrode active material layer are laminated in this order, and includes a configuration in which these constitutional layers are continuously laminated. The positive electrode active material layer is preferably formed on a positive electrode collector to constitute a positive electrode. In addition, the negative electrode active material layer is preferably formed on a negative electrode collector to constitute a negative electrode. In the present invention, each constitutional layer (including the collector layer and the like) constituting the all-solid-state secondary battery may have a monolayer structure or a multilayer structure.

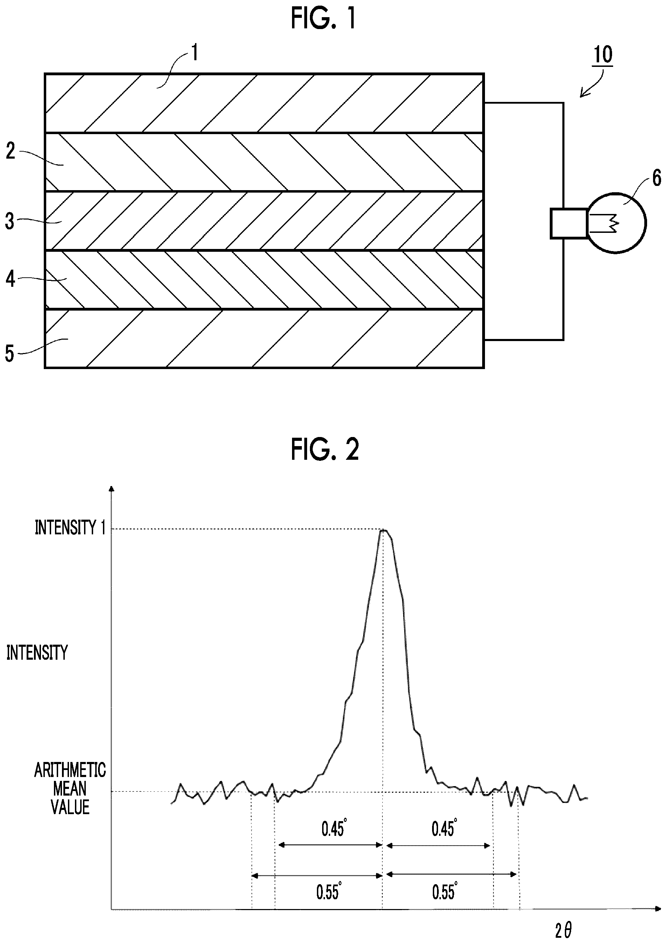

Fig. 1 shows a basic configuration of the all-solid-state secondary battery. An all-solid-state secondary battery 10 includes a negative electrode collector 1, a negative electrode active material layer 2, a solid electrolyte layer 3, a positive electrode active material layer 4, and a positive electrode collector 5 in this order as viewed from the negative electrode side. The respective layers are in contact with each other to form an adjacent structure. By adopting such a structure, during charging, electrons (e⁻) are supplied to the negative electrode side, and lithium ions (Li⁺) which have moved through the solid electrolyte layer 3 are accumulated in the negative electrode. On the other hand, during discharging, lithium ions (Li⁺) accumulated in the negative electrode are returned to the positive electrode side through the solid electrolyte layer 3, and electrons are supplied to an operation portion 6. In the illustrated example, an electric bulb is employed as a model of the operation portion 6, and is lit by the discharging.

Each constitutional layer of the all-solid-state secondary battery will be described.

<Positive electrode active material layer>

The positive electrode active material layer is a layer formed in a layer shape with a positive electrode active material or with a positive electrode active material, a solid electrolyte, preferably a conductive auxiliary agent, and other components described later within a range where the effect of the present invention is not impaired. The positive electrode active material layer may not contain the conductive auxiliary agent, other components, and the like. The positive electrode active material layer usually does not contain a negative electrode active material.

(Solid electrolyte)

In a case where the positive electrode active material layer contains a solid electrolyte (generally, an inorganic solid electrolyte), the type of the solid electrolyte is not particularly limited; and an oxide-based solid electrolyte, a halide-based solid electrolyte, or a hydride-based solid electrolyte can be used, and a sulfide-based solid electrolyte can also be used within a range where the effect of the present invention is not impaired. From the viewpoint of prioritizing high safety in a case of performing the method in the air, an oxide-based solid electrolyte can be used, and from the viewpoint of workability and recovery efficiency, it is preferable to use an oxide-based solid electrolyte (solid electrolyte (I)) described later.

The positive electrode active material layer may contain one or two or more kinds of solid electrolytes.

A content of the solid electrolyte in the positive electrode active material layer is not particularly limited, and is preferably 50% to 99.9% by mass, more preferably 70% to 99.5% by mass, and still more preferably 90% to 99% by mass, as the total content of the solid electrolyte and the positive electrode active material.

(Positive electrode active material)

As the positive electrode active material itself, a positive electrode active material which can be used for a typical all-solid-state secondary battery can be widely used. A suitable aspect of the positive electrode active material will be described below.

The positive electrode active material is an active material capable of intercalating and deintercalating an ion of a metal belonging to Group 1 or Group 2 of the periodic table, and an active material capable of reversibly intercalating and deintercalating lithium ions is preferable.

The positive electrode active material is not particularly limited, and is preferably a transition metal oxide and more preferably a transition metal oxide containing a transition metal element Ma (one or more kinds of elements selected from Co, Ni, Fe, Mn, Cu, and V). In addition, an element Mb (an element of Group 1 (Ia) of the periodic table other than lithium, an element of Group 2 (IIa), or an element such as Al, Ga, In, Ge, Sn, Pb, Sb, Bi, Si, P, or B) may be mixed into the transition metal oxide. The amount of the Mb mixed is preferably 0 to 30 mol% with respect to the amount (100 mol%) of the transition metal element Ma. It is more preferable that the transition metal oxide is synthesized by mixing the above-described components such that a molar ratio Li/Ma is 0.3 to 2.2.

Specific examples of the transition metal oxide include (MA) transition metal oxides having a bedded salt-type structure, (MB) transition metal oxides having a spinel-type structure, (MC) lithium-containing transition metal phosphoric acid compounds, (MD) lithium-containing transition metal halogenated phosphoric acid compounds, and (ME) lithium-containing transition metal silicate compounds.

Examples of the transition metal oxide having a bedded salt-type structure (MA) include $LiCoO_2$ (lithium cobalt oxide [LCO]), $LiNiO_2$ (lithium nickelate [LNO]), $LiNi_{0.85}Co_{0.10}Al_{0.05}O_2$ (lithium nickel cobalt aluminum oxide [NCA]), $LiNi_{1/3}Mn_{1/3}Co_{1/3}O_2$ (lithium nickel manganese cobalt oxide [NMC]), $LiNi_{0.5}Mn_{0.5}O_2$ (lithium manganese nickelate), and $Li_2MnO_3$-$LiNiMnCoO_2$.

Examples of the transition metal oxide having a spinel-type structure (MB) include $LiMn_2O_4$ (LMO), $LiNi_{0.5}Mn_{1.5}O_4$ ([LNMO]), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compound (MC) include olivine-type iron phosphates such as $LiFePO_4$ ([LFP]) and $Li_3Fe_2(PO_4)_3$; iron pyrophosphates such as $LiFeP_2O_7$; olivine-type manganese phosphates such as $LiMnPO_4$ [(LMP)]; olivine-type nickel phosphates such as $LiNiPO_4$ [(LNP)]; olivine-type cobalt phosphates such as $LiCoPO_4$ [(LCP)]; olivine-type cobalt pyrophosphates such as $Li_2CoP_2O_7$; and monoclinic NASICON-type vanadium phosphates such as $Li_3V_2(PO_4)_3$ (lithium vanadium phosphate).

Examples of the lithium-containing transition metal halogenated phosphoric acid compound (MD) include iron fluorophosphates such as $Li_2FePO_4F$, manganese fluorophosphates such as $Li_2MnPO_4F$, and cobalt fluorophosphates such as $Li_2CoPO_4F$.

Examples of the lithium-containing transition metal silicate compound (ME) include $Li_2FeSiO_4$, $Li_2MnSiO_4$, and $Li_2CoSiO_4$.

Among the above, as the positive electrode active material, an active material containing a rare metal element, an active material which contributes to improving the performance of the all-solid-state secondary battery, or the like can be used because they can be recovered and recycled; and for example, the transition metal oxide having a bedded salt-type structure (MA) or the like can be preferably used, and $LiCoO_2$, $LiNi_{1/3}Co_{1/3}Mn_{1/3}O_2$, $LiNi_{0.5}Mn_{1.5}O_4$, $LiFePO_4$, $Li_2CoP_2O_7$, or the like can be more preferably used. Here, the rare metal element generally refers to a metal element which is present in a small amount in the crust and is expensive, but in the present invention, it refers to a non-ferrous metal element constituting the active material for the all-solid-state secondary battery; and examples thereof include each element such as lithium, cobalt, nickel, manganese, titanium, and niobium.

A shape of the positive electrode active material is not particularly limited, and is typically a particle shape. A volume average particle size of the positive electrode active material is not particularly limited, and for example, it is preferably 0.1 to 50 $\mu$m, more preferably 1 to 20 $\mu$m, and still more preferably 3 to 15 $\mu$m. The volume average particle size of the positive electrode active material can be determined in the same manner as the volume average particle diameter of the negative electrode active material, which will be described later.

A positive electrode active material obtained using a baking method may be used after being washed with water, an acidic aqueous solution, an alkaline aqueous solution, or an organic solvent.

The positive electrode active material may be surface-coated with a surface coating agent, sulfur, or phosphorus, and further with actinic ray, same as the negative electrode active material described later.

The positive electrode active material layer may contain one or two or more kinds of the positive electrode active material.

A content of the positive electrode active material in the positive electrode active material layer is not particularly limited, and is preferably 10% to 97% by mass, more preferably 30% to 95% by mass, still more preferably 40% to 93% by mass, and particularly preferably 50% to 90% by mass.

The positive electrode active material layer may contain a component (other components) other than the solid electrolyte and the active material. For example, one kind or two or more kinds of a conductive auxiliary agent, a binder described later, a lithium salt, and the like can be contained.

(Conductive auxiliary agent)

As the conductive auxiliary agent, a conductive auxiliary agent which is known as a general conductive auxiliary agent can be used. Examples of the conductive auxiliary agent include graphite such as natural graphite and artificial graphite, carbon black such as acetylene black, Ketjen black, and furnace black, amorphous carbon such as needle cokes, carbon fiber such as vapor-grown carbon fiber and carbon nanotube, and a carbonaceous material such as graphene and fullerene, which are electron-conductive materials. Furthermore, a conductive polymer such as polyaniline, polypyrrole, polythiophene, polyacetylene, and a polyphenylene derivative may also be used. In addition to the above-described conductive auxiliary agent, a general conductive auxiliary agent containing no carbon atom, such as metal powder and metal fiber, may be used.

The conductive auxiliary agent refers to a conductive auxiliary agent which does not cause the intercalation and deintercalation of ions such as Li at the time of charging and discharging of the battery, and does not function as an active material. As a result, among conductive auxiliary agents, a conductive auxiliary agent which can function as the active material in the active material layer at the time of charging and discharging of the battery is classified as the active material, not as the conductive auxiliary agent. Whether or not the conductive auxiliary agent functions as the active material at the time of charging and discharging of the battery is not unambiguously determined, and determined by a combination with the active material.

The conductive auxiliary agent is preferably in a particle shape. In a case where the conductive auxiliary agent has a particle shape, a volume average particle size of the conductive auxiliary agent (the measuring method is the same as that for the negative electrode active material) is not particularly limited, but is, for example, preferably 0.02 to 1.0 $\mu$m.

A content of the conductive auxiliary agent in the positive electrode active material layer is not particularly limited, and it is, for example, preferably 0% to 10% by mass and more preferably 1% to 5% by mass.

(Binder)

The positive electrode active material layer may contain various binders (binding agents). An aqueous binder is preferable from the viewpoint that it can be easily removed in the method according to the embodiment of the present invention. A content of the binder in the positive electrode active material layer is not particularly limited, and it is, for example, preferably 10% by mass or less and more preferably 1% to 5% by mass.

As the water-soluble binder, a polymer including a repeating unit having at least one selected from the group consisting of a structure including a hydroxy group, a structure including a pyrrolidone ring, and a structure including an oxyalkylene group can be applied.

As the water-soluble binder including a repeating unit having a structure including a hydroxy group, polysaccharides or polyvinyl alcohol is preferable. The polysaccharides include polysaccharide derivatives and alkali metal salts thereof. As the polysaccharide derivative, a cellulose-based polymer is preferable, and a cellulose-based polymer in which at least a part of hydroxy groups is substituted with at least one selected from an alkyl group, a hydroxyalkyl group, or a carboxyalkyl group is more preferable, and carboxymethyl cellulose is particularly preferable.

As the water-soluble binder including a repeating unit having a structure including a pyrrolidone ring, polyvinylpyrrolidone is preferable.

As the water-soluble binder including a repeating unit having a structure including an oxyalkylene group, polyethylene glycol or polyethylene oxide is preferable.

A thickness of the positive electrode active material layer is not particularly limited, and for example, it is preferably 10 to 1,000 $\mu$m, more preferably 20 to 500 $\mu$m, and still more preferably 50 to 300 $\mu$m.

<Positive electrode collector>

The positive electrode collector is an electron conductor. **In** addition, the positive electrode collector is usually in a form of a film sheet.

Examples of a constitutional material of the positive electrode collector include aluminum (Al), an aluminum alloy (Al alloy), copper (Cu), stainless steel, nickel, and titanium; and aluminum, an aluminum alloy, or copper is preferable. Examples of the positive electrode collector also include a collector having a coating layer (thin film) of carbon, nickel, titanium, or silver on a surface of aluminum or stainless steel.

In a case where the positive electrode collector also functions as the positive electrode active material layer (in other words, in a case where the positive electrode active material layer also functions as the positive electrode collector), it is not necessary to include two layers of the positive electrode collector and the positive electrode active material layer, and a single layer configuration may be adopted.

A thickness of the positive electrode collector is not particularly limited, but can be set to 1 to 500 $\mu$m, preferably 10 to 100 $\mu$m.

<Solid electrolyte layer>

The solid electrolyte layer is a layer formed in a layer shape with a solid electrolyte or with a solid electrolyte, a conductive auxiliary agent, and the above-described other components described later within a range where the effect of the present invention is not impaired. The solid electrolyte layer may not contain the conductive auxiliary agent, other components, and the like.

(Solid electrolyte)

The type of the solid electrolyte contained in the solid electrolyte layer is not particularly limited; and examples thereof include an oxide-based solid electrolyte, a halide-based solid electrolyte, and a hydride-based solid electrolyte, and a sulfide-based solid electrolyte can also be used within a range where the effect of the present invention is not impaired. From the viewpoint of prioritizing high safety in a case of performing the method in the air, an oxide-based solid electrolyte can be used, and from the viewpoint of workability and recovery efficiency, it is preferable to use an oxide-based solid electrolyte described below.

The oxide-based solid electrolyte preferably contains a lithium-containing oxide containing each element of Li, B, and O (hereinafter, also referred to as "lithium-containing oxide"), water, and a lithium salt. In the solid electrolyte, a value of a ratio of a content of the lithium salt to a content of the lithium-containing oxide (lithium salt/lithium-containing oxide) is 0.001 to 1.5 in terms of a molar ratio. In addition, in the solid electrolyte, a value of a ratio of a content of the water to the content of the lithium-containing oxide (water/lithium-containing oxide) is 1 to 12 in terms of a molar ratio. The solid electrolyte containing the above-described components with the above-described molar ratio is also referred to as "solid electrolyte (I)". The solid electrolyte (I) is usually an inorganic solid electrolyte.

The above-described lithium-containing oxide can be referred to as a lithium salt depending on the kind thereof. For example, in a case of lithium tetraborate, the lithium tetraborate can be referred to as a lithium salt of boric acid, but it is classified as the above-described lithium-containing oxide, not a lithium salt described later, as long as it is an oxide containing each element of Li, B, and O.

The solid electrolyte (I) exhibits an elastic characteristic that is likely to be plastically deformed. As a result, in a constitutional layer containing the solid electrolyte (I), which is formed by a pressurization treatment or the like, adhesiveness between the solid electrolytes (I) and/or adhesiveness between the solid electrolyte (I) and other components in the constitutional layer are improved, so that an interface resistance can be reduced and more excellent ion conductivity can be obtained. By using the solid electrolyte (I), it is possible to form a constitutional layer which exhibits excellent ion conductivity by a pressurization treatment or the like without performing a high-temperature sintering treatment, even though the solid electrolyte is an oxide-based solid electrolyte having high safety.

In addition, as described above, the solid electrolyte (I) has a characteristic of exhibiting solubility in water to form an aqueous solution or an aqueous dispersion liquid, in a case where a concentration thereof is lowered.

The above-described water contained in the solid electrolyte (I) includes at least bound water. The reason why the solid electrolyte (I) exhibits high lithium ion conductivity is not clear, but it is considered that, in the solid electrolyte (I), a soft hydrated layer is easily formed on a surface of the lithium-containing oxide, and a large amount of lithium derived from the lithium salt is contained in the hydrated layer, and as a result, the ion conductivity is further enhanced.

Here, in the present invention or the specification, the "bound water" means water other than water present as free water or an OH group bonded to the lithium-containing oxide. The solid electrolyte (I) is in a state of solid particles (including a state in which the solid particles are bonded to each other) even in a case of containing water with the above-described amount, and functions as a solid electrolyte of the all-solid-state secondary battery. That is, the solid electrolyte (I) contains the bound water which is not removed or is difficult to be removed under normal drying conditions. In a case where the solid electrolyte (I) functions as a solid electrolyte of the all-solid-state secondary battery in the state of solid particles (a state in which the solid particles can be handled as a powder), the solid electrolyte (I) may contain free water.

That is, in the present invention, the "all-solid-state secondary battery" includes a form in which the solid electrolyte contains water as long as the solid electrolyte can be handled as the solid particles (solid powder). In addition, the solid electrolyte (I) used in the present invention, in which the value of the ratio of the content of water to the content of the lithium-containing oxide is 12 or less in terms of a molar ratio, is not in any of a paste state or a gel state, but is in the state of solid particles (solid powder).

In the present invention, it is preferable that the solid electrolyte (I) is in an amorphous state (synonymous with a non-crystalline state) from the viewpoint of easily exhibiting the elastic characteristic that is likely to be plastically deformed. The "amorphous" solid electrolyte (I) means that the following X-ray diffraction characteristics are satisfied.

(X-ray diffraction characteristics)

In an X-ray diffraction pattern of the solid electrolyte (I) obtained from an X-ray diffraction measurement using a CuK$\alpha$ ray, none of a first peak in which a peak top is located in a range where a diffraction $2\theta$ is 21.6° to 22.0° and a full-width at half maximum is 0.65° or less, a second peak in which a peak top is located in a range where a diffraction $2\theta$ is 25.4° to 25.8° and a full-width at half maximum is 0.65° or less, a third peak in which a peak top is located in a range where a diffraction $2\theta$ is 33.4° to 33.8° and a full-width at half maximum is 0.65° or less, and a fourth peak in which a peak top is located in a range where a diffraction $2\theta$ is 34.4° to 34.8° and a full-width at half maximum is 0.65° or less are present. Alternatively, in the X-ray diffraction pattern, in a case where at least one peak of the first peak, the second peak, the third peak, or the fourth peak described above (hereinafter, referred to as "peak X) is present, an intensity ratio of the at least one peak in the peak X, which is calculated by the following intensity measuring method, is 5.0 or less.

-Intensity measuring method-

An average intensity (Av1) in a range of +0.45° to +0.55° from the diffraction angle $2\theta$ of the peak top of the peak X is calculated and an average intensity (Av2) in a range of -0.55° to -0.45° from the diffraction angle $2\theta$ of the peak top of the peak X is calculated, and an arithmetic mean value of Av1 and Av2 is calculated. A value of a ratio of a peak intensity at the peak top of the peak X to the arithmetic mean value (peak intensity at peak top of peak X/arithmetic mean value) is defined as the intensity ratio.

The X-ray diffraction characteristics will be described in more detail.

In a case where none of the first peak, the second peak, the third peak, and the fourth peak described above are present in the X-ray diffraction pattern of the solid electrolyte (I) obtained from the X-ray diffraction measurement using a CuK$\alpha$ ray, the above-described X-ray diffraction characteristics are satisfied, and the solid electrolyte (I) is in an amorphous state.

In addition, even though the above-described peak X is present in the X-ray diffraction pattern of the solid electrolyte (I) obtained from the X-ray diffraction measurement using a CuK$\alpha$ ray, in a case where the intensity ratio of the at least one peak in the peak X, which is obtained by the above-described intensity measuring method, satisfies 5.0 or less, the above-described X-ray diffraction characteristics are satisfied, and the solid electrolyte (I) is in an amorphous state.

Here, the full-width at half maximum (FWHM) of the peak means a peak width (°) at a point of 1/2 of the peak intensity at the peak top.

The above-described intensity measuring method will be described in more detail with reference to Fig. 2.

Fig. 2 is a diagram showing an example of the peak X appearing in a diffraction pattern of the solid electrolyte (I) obtained from an X-ray diffraction measurement using a CuK$\alpha$ ray. In the X-ray diffraction pattern shown in Fig. 2, a specific peak in which an intensity of a peak top is represented by an intensity 1 is shown. In the intensity measuring method, as shown in Fig. 2, an average intensity (Av1) in a range of +0.45° to +0.55° from the diffraction angle $2\theta$ of the peak top of the peak X is calculated, and an average intensity (Av2) in a range of -0.55° to -0.45° from the diffraction angle $2\theta$ of the peak top of the peak X is calculated. Next, an arithmetic mean value of Av1 and Av2 is calculated, and a value of a ratio of the intensity 1 to the arithmetic mean value is obtained as the intensity ratio.

In a case where the above-described X-ray diffraction characteristics are satisfied, it means that the solid electrolyte (I) does not have a crystal structure, or almost does not have a crystal structure and is in an amorphous state. That is, the above-described first peak to fourth peak are mainly peaks derived from a crystal structure in the solid electrolyte (for example, a crystal structure of lithium tetraborate), and a case where these peaks are not present means that the solid electrolyte is in an amorphous state. In addition, even though at least one of the first peak to the fourth peak is present, a case where the intensity ratio of the at least one peak in the present peaks X is 5.0 or less means that almost no crystal structure which hinders the effect of the present invention is present in the solid electrolyte (I). For example, a peak derived from a specific component (for example, the lithium salt) may overlap with any one of the above-described first peak to fourth peak. However, in the amorphous solid electrolyte, all of the first peak to the fourth peak are usually decreased. Therefore, even in a case where a peak due to the specific component overlap with any one of the first peak to the fourth peak and one large peak appears, it can be said that the presence of at least one peak X in which the intensity ratio is equal to or less than a predetermined value indicates that the solid electrolyte (I) is in an amorphous state.

The above-described X-ray diffraction measurement is performed using a CuKα ray under measurement conditions of 0.01 °/step and 3 °/min.

In the X-ray diffraction pattern of the solid electrolyte (I) obtained from the X-ray diffraction measurement using a CuKα ray, it is preferable that none of the first peak, the second peak, the third peak, and the fourth peak described above is present, or even in a case where at least one peak X of the first peak, the second peak, the third peak, and the fourth peak described above is present, the intensity ratio of the at least one peak in the peak X is 3.0 or less.

Among these, it is more preferable that none of the first peak, the second peak, the third peak, and the fourth peak described above is present, or even in a case where at least one peak X of the first peak, the second peak, the third peak, and the fourth peak described above is present, the intensity ratio of the at least one peak in the peak X is 2.0 or less.

In the above-described X-ray diffraction pattern, in a case where two or more peaks in which a peak top is located in a range of 21.6° to 22.0° and the full-width at half maximum is 0.65° or less are present, a peak having the highest diffracted X-ray intensity is selected as the first peak to determine the above-described X-ray diffraction characteristics.

In addition, in the above-described X-ray diffraction pattern, in a case where two or more peaks in which a peak top is located in a range of 25.4° to 25.8° and the full-width at half maximum is 0.65° or less are present, a peak having the highest diffracted X-ray intensity is selected as the second peak to determine the above-described X-ray diffraction characteristics.

In addition, in the above-described X-ray diffraction pattern, in a case where two or more peaks in which a peak top is located in a range of 33.4° to 33.8° and the full-width at half maximum is 0.65° or less are present, a peak having the highest diffracted X-ray intensity is selected as the third peak to determine the above-described X-ray diffraction characteristics.

In addition, in the above-described X-ray diffraction pattern, in a case where two or more peaks in which a peak top is located in a range of 34.4° to 34.8° and the full-width at half maximum is 0.65° or less are present, a peak having the highest diffracted X-ray intensity is selected as the fourth peak to determine the above-described X-ray diffraction characteristics.

(X-ray total scattering characteristics)

The solid electrolyte (I) preferably satisfies the following requirement A-1 as X-ray total scattering characteristics. In addition, in a case where the solid electrolyte (I) satisfies the above-described X-ray diffraction characteristics, the solid electrolyte (I) generally satisfies the following requirement A-2.

-Requirement A-1-

In a reduced pair distribution function G(r) of the solid electrolyte (I) obtained from an X-ray total scattering measurement, a first peak in which a peak top is located in a range where r is 1.43 ± 0.2 Å and a second peak in which a peak top is located in a range where r is 2.40 ± 0.2 Å are present, G(r) of the peak top of the first peak is more than 1.0, and G(r) of the peak top of the second peak is 0.8 or more.

-Requirement A-2-

In the reduced pair distribution function G(r) of the solid electrolyte (I) obtained from an X-ray total scattering measurement, an absolute value of G(r) in a range where r is more than 5 Å and 10 Å or less is less than 1.0.

In a case where the solid electrolyte (I) satisfies the requirement A-1 and the requirement A-2, the solid electrolyte (I) has a short-range ordered structure related to interatomic distances of B-O and B-B, but has almost no long-range ordered structure. Therefore, the oxide solid electrolyte itself exhibits an elastic characteristic of being softer and more easily plastically deformable than the lithium-containing oxide in the related art. As a result, in a layer containing the solid electrolyte (I) which is formed by a pressurization treatment or the like, adhesiveness between the solid electrolytes (I) and/or adhesiveness between the solid electrolyte (I) and other components in the constitutional layer are improved, and it is presumed that an interface resistance can be reduced and more excellent ion conductivity can be obtained.

The requirement A-1 and the requirement A-2 will be described in more detail with reference to the drawings.

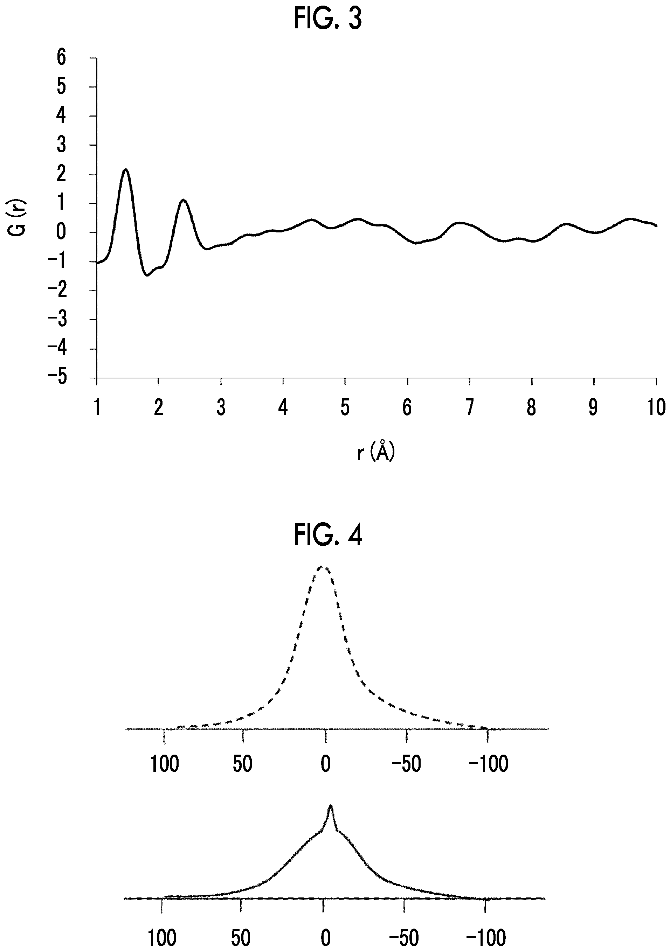

Fig. 3 shows an example of the reduced pair distribution function G(r) of the solid electrolyte (I) obtained by an X-ray total scattering measurement. A vertical axis of Fig. 3 is a reduced pair distribution function obtained by subjecting X-ray scattering to Fourier transform, and it indicates the probability that an atom is present at a position of a distance r. The X-ray total scattering measurement can be performed using SPring-8 BL04B2 (acceleration voltage: 61.4 keV, wavelength: 0.2019 Å). The reduced pair distribution function G(r) is obtained by converting a scattering intensity $I_{obs}$ which is obtained experimentally according to the following procedure.

First, the scattering intensity $I_{obs}$ is represented by the following expression (1). In addition, a structure factor S(Q) is obtained by dividing a coherent scattering $I_{coh}$ by the product of the number N of atoms and the square of an atomic scattering factor f, as represented by the following expression (2).

$$I_{obs} = I_{coh} + I_{incoh} + I_{fluorescence} \qquad (1)$$

$$S(Q) = \frac{I_{coh}}{Nf^2} \qquad (2)$$

The structure factor S(Q) is used for pair distribution function (PDF) analysis. In the above expression (2), a required intensity is solely the coherent scattering $I_{coh}$. The incoherent scattering $I_{incoh}$ and the X-ray fluorescence $I_{fluorescence}$ can be subtracted from the scattering intensity $I_{obs}$ by a blank measurement, subtraction using a theoretical expression, and a discriminator of a detector.

The coherent scattering $I_{con}$ is represented by Debye's scattering expression (the following expression (3)) (N: total number of atoms, f: atomic scattering factor, $r_{ij}$: interatomic distance between i and j).

$$I_{coh} = \sum_{i=1}^{N} \sum_{j=1}^{N} f_i f_j \frac{sinQr_{ij}}{Qr_{ij}} \qquad (3)$$

Focusing on any atom, in a case where an atomic density at the distance r is denoted by $\rho(r)$, the number of atoms present inside a sphere having a radius of r to r + d(r) is $4\pi r^2 \rho(r)dr$, and thus the above expression (3) is represented by the following expression (4).

$$I_{coh} = Nf^2 \left[ 1 + 4\pi \int_0^\infty r^2 \rho(r) \frac{sinQr}{Qr} dr \right] \qquad (4)$$

In a case where an average density of atoms is denoted by $\rho_0$, the above expression (4) is modified to obtain the following expression (5).

$$\frac{I_{coh}}{N} = f^2 \left[ 1 + 4\pi \int_0^\infty r^2 (\rho(r) - \rho_0) \frac{sinQr}{Qr} \right] \qquad (5)$$

From the above expression (5) and the above expression (2), the following expression (6) is obtained.

$$4\pi r^2 \rho(r) = 4\pi r^2 \rho_0 + \frac{2r}{\pi} \int_0^\infty Q[S(Q) - 1]sinQrdQ \qquad (6)$$

The pair distribution function g(r) is represented by the following expression (7).

$$g(r) = \frac{\rho_r}{\rho_0} \qquad (7)$$

From the above expression (6) and the above expression (7), the following expression (8) is obtained.

$$g(r) = 1 + \frac{1}{2\pi^2 \rho_0 r} \int_0^\infty Q[S(Q) - 1]\sin Qr dQ \qquad (8)$$

As described above, the pair distribution function can be determined by the Fourier transform of the structural factor S(Q). In order to easily observe medium-range and long-range order, the pair distribution function g(r) is converted into an expression: G(r) = 4πr(g(r) - 1), which is the reduced pair distribution function G(r) (Fig. 3). The g(r) which oscillates around 0 represents a density difference from the average density at each interatomic distance, and it is larger than the average density of 1 in a case where there is a correlation at a specific interatomic distance. As a result, it reflects the distance and coordination number of elements corresponding to the local to intermediate distance. In a case where the order is lost, ρ(r) approaches the average density, and thus g(r) approaches 1. Therefore, in the amorphous structure, as r is larger, the order is lost, and thus g(r) is 1, that is, G(r) is 0.

In the requirement A-1, as shown in Fig. 3, in the reduced pair distribution function G(r) of the solid electrolyte (I) obtained from an X-ray total scattering measurement, a first peak P1 in which a peak top is located in a range where r is 1.43 ± 0.2 Å and a second peak P2 in which a peak top is located in a range where r is 2.40 ± 0.2 Å are present, G(r) of the peak top of the first peak P1 is more than 1.0 (preferably, 1.2 or more), and G(r) of the peak top of the second peak P2 is 0.8 or more (preferably, more than 1.0).

In Fig. 3, the peak top of the first peak P1 is located at 1.43 Å, and the peak top of the second peak P2 is located at 2.40 Å.

At the position of 1.43 Å, a peak attributed to the interatomic distance of boron (B) - oxygen (O) is present. In addition, at the position of 2.40 Å, a peak attributed to the interatomic distance of boron (B) - boron (B) is present. That is, the fact that the above-described two peaks (the first peak and the second peak) are observed means that periodic structures corresponding to the above-described two interatomic distances are present in the solid electrolyte (I).

In addition, in the requirement A-2, as shown in Fig. 3, the absolute value of G(r) in a range where r is more than 5 Å and 10 Å or less is less than 1.0. As described above, the fact that the absolute value of G(r) in a range where r is more than 5 Å and 10 Å or less is less than 1.0 means that the long-range ordered structure is hardly present in the solid electrolyte (I).

In the above-described reduced pair distribution function G(r), peaks other than the first peak and the second peak may be present in a range where r is 5 Å or less.

A method of forming the solid electrolyte (I) into an amorphous state is not particularly limited. For example, in preparation of the solid electrolyte (I), a method of using, as a raw material, a lithium-containing oxide subjected to a mechanical milling treatment can be adopted. The mechanical milling treatment may be performed in the presence of the lithium salt.

-Mechanical milling treatment-

The mechanical milling treatment is a treatment of pulverizing a sample while applying mechanical energy. Examples of the mechanical milling treatment include a milling treatment using a ball mill, a vibration mill, a turbo mill, or a disc mill, and from the viewpoint of obtaining the amorphous solid electrolyte (I) with high productivity, a milling treatment using a ball mill is preferable. Examples of the ball milling include vibration ball milling, rotary ball milling, and planetary ball milling, and planetary ball milling is more preferable.

Conditions of the milling treatment using a ball mill (hereinafter, referred to as a ball milling treatment) are appropriately adjusted depending on the treatment target. A material of pulverization balls (media) is not particularly limited, and examples thereof include agate, silicon nitride, zirconia, alumina, and an iron-based alloy, in which stabilized zirconia (YSZ) is preferable. An average particle diameter of the pulverization balls is not particularly limited, but from the viewpoint that the solid electrolyte (I) can be produced with high productivity, it is preferably 1 to 10 mm and more preferably 3 to 7 mm. The above-described average particle diameter is obtained by randomly measuring diameters of 50 pulverization balls and arithmetically averaging the measured values. In a case where the pulverization balls are not spherical, a major axis is taken as the diameter. The number of pulverization balls is not particularly limited, and the ball milling treatment is usually performed using 10 to 100 balls, preferably 40 to 60 balls.

A material of a pulverization pot in the ball milling treatment is also not particularly limited. Examples thereof include agate, silicon nitride, zirconia, alumina, and an iron-based alloy, and stabilized zirconia (YSZ) is preferable.

A rotation speed of the ball milling treatment is not particularly limited, and can be set to, for example, 200 to 700 rpm, preferably 350 to 550 rpm. A treatment time of the ball milling treatment is not particularly limited, and can be set to, for example, 10 to 200 hours, preferably 20 to 140 hours. The atmosphere of the ball milling treatment may be an atmosphere of the air or an atmosphere of an inert gas (for example, argon gas, helium gas, nitrogen gas, or the like).

As a method of producing the solid electrolyte (I) using the lithium-containing oxide subjected to the mechanical milling treatment, it is preferable to perform the following steps 1A to 3A.

Step 1A: step of subjecting a lithium-containing oxide to a mechanical milling treatment in the presence of a lithium salt
Step 2A: step of mixing the product obtained in the step 1A with water
Step 3A: step of removing water from the dispersion liquid obtained in the step 2A to obtain the solid electrolyte (I)

In the step 1A, an amount of the lithium salt used is not particularly limited and is appropriately adjusted such that the solid electrolyte (I) defined in the present invention is obtained.
In the above-described step 2A, an amount of water used is not particularly limited. For example, the amount of water used can be set to 10 to 200 parts by mass, preferably 50 to 150 parts by mass with respect to 100 parts by mass of the product obtained in the step 1A.
The method of mixing the product obtained in the step 1A with the water is not particularly limited, and the mixing may be performed in a batchwise manner or may be performed such that the water is added stepwise to the product obtained in the step 1A. In the mixing, an ultrasonic treatment may be performed as necessary. A time of the ultrasonic treatment is not particularly limited, and can be set to, for example, 10 minutes to 5 hours.
The step 3A is a step of removing water from the dispersion liquid obtained in the step 2A to obtain the solid electrolyte (I). The method of removing the water from the dispersion liquid obtained in the step 2A is not particularly limited, and the water may be removed by a heating treatment or may be removed by a vacuum drying treatment.
Drying conditions are not particularly limited, and for example, normal drying conditions that are applied to a general drying treatment can be appropriately applied. Examples thereof include drying conditions applied in Examples. Examples of the normal drying conditions include each of conditions of natural drying (< 30 %RH), desiccator (< 5 %RH) drying, and heating drying at 100°C for 30 minutes to 2 hours.
Before the above-described step 1A, a step 0 of subjecting the lithium-containing oxide to a mechanical milling treatment in an environment in which a lithium salt is not present may be performed.
As the method of producing the solid electrolyte (I), it is also preferable to perform the following steps 1B to 3B, instead of the above-described steps 1A to 3A.

Step 1B: step of subjecting a lithium-containing oxide to a mechanical milling treatment
Step 2B: step of mixing the product obtained in the step 1B with water and a lithium salt
Step 3B: step of removing water from the dispersion liquid obtained in the step 2B to obtain the solid electrolyte (I)

The method of performing the steps 1B to 3B is different from the method of performing the steps 1A to 3A in that the lithium salt is mixed with the lithium-containing oxide which has been subjected to the mechanical milling treatment in the presence of water. Therefore, the difference between the step 1B and the step 1A is that the mechanical milling treatment is performed in the presence of the lithium salt in the step 1A, whereas the mechanical milling treatment is performed without using the lithium salt in the step 1B. Accordingly, in the step 2B, the product obtained in the step 1B is mixed with water and a lithium salt.
A procedure of the step 2B is not particularly limited, and may be a method (method 1) of collectively mixing the product obtained in the step 1B, water, and a lithium salt; a method (method 2) of preparing a dispersion liquid by mixing the product obtained in the step 1B with water, and then mixing the obtained dispersion liquid with a lithium salt; or a method (method 3) of preparing a dispersion liquid 1 by mixing the product obtained in the step 1B with water, preparing a solution 2 by mixing a lithium salt with water, and then mixing the dispersion liquid 1 with the solution 2. In a case where the product obtained in the step 1B is mixed with water, a dispersion treatment such as an ultrasonic treatment may be appropriately performed.
In the method 2, in a case where the dispersion liquid obtained by mixing the product obtained in the step 1B with water is mixed with a lithium salt, the obtained solution is likely to be gelated in a case where the lithium salt is too much, so that the mixing amount of the lithium salt is restricted. On the other hand, in the method 3, even in a case where the product obtained in the step 1B and the lithium salt are mixed in an equimolar amount, the gelation of the solution is less likely to occur, so that the mixing amount of the lithium salt can be increased. From this viewpoint, the method 3 is preferable.
The procedures of the step 3B and the step 3A are the same.
As the method of producing the solid electrolyte (I), it is also preferable to perform the following steps 1C to 3C, instead of the above-described steps 1A to 3A.

Step 1C: step of subjecting a lithium-containing oxide to a mechanical milling treatment
Step 2C: step of mixing the product obtained in the step 1C with water
Step 3C: step of mixing a product obtained by removing water from the dispersion liquid obtained in the step 2C with a lithium salt to obtain the solid electrolyte (I)

The procedures of the step 1C and the step 1B are the same.
The procedures of the step 2C and the step 2A are the same.

The step 3C is different from the steps 3A and 3B in that the product obtained by removing water from the dispersion liquid obtained in the step 2C is mixed with a lithium salt.

In the step 3C, an amount of the lithium salt used is not particularly limited and is appropriately adjusted such that the solid electrolyte (I) defined in the present invention is obtained.

The method of mixing the product obtained by removing water from the dispersion liquid obtained in the step 2C with a lithium salt is not particularly limited, and a method of infusing the product with a solution obtained by dissolving the lithium salt in water to mix the two may be adopted.

(Component composition of solid electrolyte (I))

In the solid electrolyte (I), the value of the ratio of the content of the lithium salt to the content of the lithium-containing oxide is 0.001 to 1.5 in terms of a molar ratio, and the value of the ratio of the content of water to the content of the lithium-containing oxide is 1 to 12 in terms of a molar ratio.

The value of the ratio of the content of the lithium salt to the content of the lithium-containing oxide in the solid electrolyte (I) is preferably 0.001 to 1.2, more preferably 0.01 to 1.2, still more preferably 0.1 to 1.2, and particularly preferably 0.5 to 1.2 in terms of a molar ratio.

In addition, the value of the ratio of the content of the water to the content of the lithium-containing oxide in the solid electrolyte (I) is preferably 2 to 12 and more preferably 3 to 11 in terms of molar ratio. In addition, the molar ratio is also preferably 2 to 10, 2 to 8, 2 to 7, or 3 to 7.

The molar amounts of the lithium-containing oxide, the lithium salt, and the water in the solid electrolyte (I) can be determined based on element analysis. Examples of the element analysis include a method of element analysis described in the element composition of the solid electrolyte (I), which will be described later. In addition, the molar amount of the water can also be determined by Karl Fischer method or the like.

The content of the water in the solid electrolyte (I) is preferably 50% by mass or less, more preferably 45% by mass or less, still more preferably 40% by mass or less, and particularly preferably 35% by mass or less. In addition, the content of the water in the solid electrolyte (I) is also preferably 30% by mass or less, or 25% by mass or less.

In addition, the content of the water in the solid electrolyte (I) is usually 5% by mass or more, preferably 10% by mass or more and more preferably 15% by mass or more. Therefore, the content of the water in the solid electrolyte (I) is preferably 5% to 50% by mass, more preferably 5% to 45% by mass, still more preferably 10% to 40% by mass, and particularly preferably 10% to 35% by mass; and also preferably 10% to 30% by mass, 15% to 30% by mass, or 15% to 25% by mass.

The content of the lithium-containing oxide in the solid electrolyte (I) is preferably 20% to 80% by mass, more preferably 20% to 75% by mass, and still more preferably 25% to 70% by mass.

In addition, the content of the lithium salt in the solid electrolyte (I) is preferably 0.5% to 60% by mass, more preferably 1.0% to 55% by mass, and still more preferably 2.0% to 50% by mass; and also preferably 5.0% to 50% by mass.

-Lithium-containing oxide-

As described above, the lithium-containing oxide constituting the solid electrolyte (I) contains Li, B, and O.

The above-described lithium-containing oxide is preferably a compound represented by $Li_{2+x}B_{4+y}O_{7+z}$ (-0.3 < x < 0.3, -0.3 < y < 0.3, -0.3 < z < 0.3). That is, in a case where a molar amount of Li is represented by setting a molar amount of B to 4.00, the molar amount of Li is preferably 1.58 to 2.49 (that is, 1.7 × 4/4.3 to 2.3 × 4/3.7), and the molar amount of O is preferably 6.23 to 7.89 (that is, 6.7 × 4/4.3 to 7.3 × 4/3.7). In other words, assuming that the molar content amount of B is set to 4.00, it is preferable that the relative value of the molar content amount of Li is 1.58 to 2.49 and the molar amount of O is 6.23 to 7.89. Typical examples of such a lithium-containing oxide include lithium tetraborate ($Li_2B_4O_7$).

In addition, the above-described lithium-containing oxide is also preferably a compound represented by $Li_{1+x}B_{3+y}O_{5+z}$ (-0.3 < x < 0.3, -0.3 < y < 0.3, -0.3 < z < 0.3). Typical examples of such a lithium-containing oxide include lithium triborate ($LiB_3O_5$).

In addition, the above-described lithium-containing oxide is also preferably a compound represented by $Li_{3+x}B_{11+y}O_{18+z}$ (-0.3 < x < 0.3, -0.3 < y < 0.3, -0.3 < z < 0.3). Typical examples of such a lithium-containing oxide include $Li_3B_{11}O_{18}$.

In addition, the above-described lithium-containing oxide is also preferably a compound represented by $Li_{3+x}B_{7+y}O_{12+z}$ (-0.3 < x < 0.3, -0.3 < y < 0.3, -0.3 < z < 0.3). Typical examples of such a lithium-containing oxide include $Li_3B_7O_{12}$.

Therefore, the above-described lithium-containing oxide is preferably at least one of $Li_{2+x}B_{4+y}O_{7+z}$, $Li_{1+x}B_{3+y}O_{5+2}$, $Li_{3+x}B_{11+y}O_{18+2}$, or $Li_{3+x}B_{7+y}O_{12+z}$ described above.

In addition, at least one of $LiBO_5$, $Li_2B_7O_{12}$, $LiB_2O_3(OH)H_2O$, or $Li_4B_8O_{13}(OH)_2(H_2O)_3$ can also be used as the lithium-containing oxide, instead of the above-described lithium-containing oxide or together with the above-described lithium-containing oxide.

In the solid electrolyte (I), it is preferable that the lithium-containing oxide is in an amorphous state.. That is, it is preferable that the lithium-containing oxide in the solid electrolyte (I) is also in a desired amorphous state such that the solid electrolyte (I) is in the above-described amorphous state.

Among these, the lithium-containing oxide is preferably amorphous lithium tetraborate.

-Lithium salt-

The lithium salt constituting the solid electrolyte (I) is not particularly limited; examples thereof include a salt composed of $Li^+$ and an anion; and a salt composed of $Li^+$ and an organic anion is preferable and a salt composed of $Li^+$ and an organic anion having a halogen atom is more preferable.

It is preferable that the lithium salt constituting the solid electrolyte (I) contains two or more specific elements selected from the group consisting of an element of Group 3 of the periodic table, an element of Group 4 of the periodic table, an element of Group 13 of the periodic table, an element of Group 14 of the periodic table, an element of Group 15 of the periodic table, an element of Group 16 of the periodic table, an element of Group 17 of the periodic table, and H.

As the lithium salt constituting the solid electrolyte (I), for example, a compound represented by Formula (1) is preferable.

$$\text{Formula (1)} \qquad LiN(R_{f1}SO_2)(R_{f2}SO_2)$$

$R_{f1}$ and $R_{f2}$ each independently represent a halogen atom or a perfluoroalkyl group. $R_{f1}$ and $R_{f2}$ may be the same or different from each other.

In a case where $R_{f1}$ and $R_{f2}$ are a perfluoroalkyl group, the number of carbon atoms in the perfluoroalkyl group is not particularly limited.

$R_{f1}$ and $R_{f2}$ are preferably a halogen atom or a perfluoroalkyl group having 1 to 6 carbon atoms, more preferably a halogen atom or a perfluoroalkyl group having 1 or 2 carbon atoms, and still more preferably a halogen atom. As the volume of the terminal group increases, the steric hindrance increases, which is a factor that hinders ion conduction. Therefore, in a case where $R_{f1}$ and $R_{f2}$ are a perfluoroalkyl group, the perfluoroalkyl group preferably has a small number of carbon atoms.

The lithium salt which can be contained in the solid electrolyte (I) is not limited to the above-described compound represented by Formula (1). Examples of the lithium salt which can be contained in the solid electrolyte (I) used in the present invention are shown below.

(L-1) Inorganic lithium salt: inorganic fluoride salt such as $LiPF_6$, $LiBF_4$, $LiAsF_6$, and $LiSbF_6$; perhalogenate such as $LiClO_4$, $LiBrO_4$, and $LiIO_4$; and an inorganic chloride salt such as $LiAlCl_4$

(L-2) Fluorine-containing organic lithium salt: perfluoroalkane sulfonate such as $LiCF_3SO_3$; fluorosulfonylimide salt or perfluoroalkanesulfonylimide salt such as $LiN(CF_3SO_2)_2$, $LiN(CF_3CF_2SO_2)_2$, $LiN(FSO_2)_2$ (in the present specification, also described as $Li(FSO_2)_2N$), and $LiN(CF_3SO_2)(C_4F_9SO_2)$; perfluoroalkane sulfonylmethide salt such as $LiC(CF_3SO_2)_3$; and fluoroalkyl fluorophosphate (preferably, perfluoroalkyl fluorophosphate) such as $Li[PF_5(CF_2CF_2CF_3)]$, $Li[PF_4(CF_2CF_2CF_3)_2]$, $Li[PF_3(CF_2CF_2CF_3)_3]$, $Li[PF_5(CF_2CF_2CF_2CF_3)]$, $Li[PF_4(CF_2CF_2CF_2CF_3)_2]$, and $Li[PF_3(CF_2CF_2CF_2CF_3)_3]$

(L-3) Oxalatoborate salt: lithium bis(oxalato)borate and lithium difluorooxalatoborate

In addition to the above, examples of the lithium salt include $LiF$, $LiCl$, $LiBr$, $LiI$, $Li_2SO_4$, $LiNO_3$, $Li_2CO_3$, $CH_3COOLi$, $LiAsF_6$, $LiSbF_6$, $LiAlCl_4$, and $LiB(C_6H_5)_4$.

Among these, $LiPF_6$, $LiBF_4$, $LiAsF_6$, $LiSbF_6$, $LiClO_4$, $Li(R_{f11}SO_2)$, $LiN(R_{f11}SO_2)_2$, $LiN(FSO_2)_2$, or $LiN(R_{f11}SO_2)(R_{f12}SO_2)$ is preferable; and $LiPF_6$, $LiBF_4$, $LiN(R_{f11}SO_2)_2$, $LiN(FSO_2)_2$, or $LiN(R_{f11}SO_2)(R_{f12}SO_2)$ is more preferable. In these examples, $R_{f11}$ and $R_{f12}$ each independently represent a perfluoroalkyl group, and the number of carbon atoms therein is preferably 1 to 6, more preferably 1 to 4, and still more preferably 1 or 2. $R_{f11}$ and $R_{f12}$ may be the same or different from each other. In addition, $LiNO_3$ or 1,1,2,2,3,3-hexafluoropropane-1,3-disulfonimide lithium is also preferable as the lithium salt.

Here, the solid electrolyte (I) is an electrolyte containing a specific amount of the lithium-containing oxide, the lithium salt, and water, and in the solid electrolyte (I), the above-described lithium salt may be present as a dissociated ion, or the dissociated ion may be present in a form of being doped in the lithium-containing oxide. In this case, the lithium salt may include a lithium salt which is no longer present in a form of the lithium salt in the solid electrolyte (I), but such a solid electrolyte is also included in the solid electrolyte (I).

(Element composition of solid electrolyte (I))

Regarding the solid electrolyte (I), the component composition thereof is described with reference to the compound constituting the solid electrolyte (I). Next, the solid electrolyte (I) will be described from the viewpoint of a preferred element composition. That is, in one aspect of the present invention, the solid electrolyte (I) can be specified as follows, for example, based on the element composition without including the "lithium-containing oxide" and the "lithium salt" as the invention specific matters.

In the solid electrolyte (I) contained in the all-solid-state secondary battery member, in a case where the molar amount of B in the solid electrolyte (I) is set to 4.00, the molar amount of Li is preferably 1.58 to 3.49 (preferably 1.58 to 3.00, more preferably 1.90 to 3.00, and still more preferably 2.00 to 3.00). In addition, in a case where the molar amount of B in the solid electrolyte (I) is set to 4.00, the molar amount of O is preferably 6.23 to 25.00 (preferably 6.50 to 23.00, more preferably 8.00 to 23.00, still more preferably 10.00 to 23.00, and particularly preferably 10.00 to 18.00). In addition, in a case where the molar amount of B in the solid electrolyte (I) is set to 4.00, it is preferable that molar amounts of elements other than B, Li, and O are each preferably 0.001 to 10.00 (preferably 0.001 to 6.00 and more preferably 0.01 to 5.00).

The content of each element is specified by a general element analysis. As a method of the element analysis, for example, Li and B are analyzed by inductively coupled plasma optical emission spectrometry (ICP-OES); N and the like are analyzed by an inert gas melting method; and F and S are analyzed by combustion ion chromatography. Regarding O, analyzed masses of elements other than O are added together, and the content of O can be calculated as a difference between the analyzed masses and the total amount of the powder. The method of calculating the content of each element is not limited to those described above, and from an analysis result of a content of one kind of element, a content of another element may be estimated in consideration of the structure of the compound to be used.

From the content of each element calculated by the element analysis, the molar amounts of Li, O, and other elements in a case where the molar amount of B is set to 4.00 are calculated.

In a preferred aspect of the solid electrolyte (I), in addition to Li, B, and O, the solid electrolyte (I) further contains one or more elements (E) selected from an element of Group 4 of the periodic table, an element of Group 15 of the periodic table, an element of Group 16 of the periodic table, an element of Group 17 of the periodic table, Si, C, Sc, and Y; and it is more preferable to contain two or more kinds thereof.

Examples of the element of Group 4 of the periodic table include Ti, Zr, Hf, and Rf. Examples of the element of Group 15 of the periodic table include N, P, As, Sb, Bi, and Mc. Examples of the element of Group 16 of the periodic table S, Se, Te, Po, and Lv. Examples of the element of Group 17 of the periodic table include F, Cl, Br, I, At, and Ts.

Among these, it is preferable to contain one or more elements (E) selected from F, Cl, Br, I, S, P, Si, Se, Te, C, Sb, As, Sc, Y, Zr, Ti, Hf, and N; and it is more preferable to contain two or more kinds thereof.

The kind of the element (E) contained in the solid electrolyte (I) may be 3 or more, and is preferably 2 to 5 and more preferably 2 to 4.

As a suitable aspect of the solid electrolyte (I), it is preferable to contain two or more elements (E) selected from F, S, N, P, and C; it is more preferable to contain two or more elements (E) selected from F, S, C, and N; and it is still more preferable to contain three elements (E) of F, S, and N.

In the solid electrolyte (I) containing one or more kinds (preferably two or more kinds) of the above-described elements (E), in a case where the molar amount of Li is represented by setting the molar amount of B in the solid electrolyte (I) to 4.00, the molar amount of Li is preferably 1.58 to 3.49. That is, in a case where the molar content amount of B is set to 4.00, the relative value of the molar content amount of Li is preferably 1.58 to 3.49. Among these, in a case where the molar amount of Li is represented by setting the molar amount of B in the solid electrolyte (I) to 4.00, the molar amount of Li is preferably 1.58 to 3.00, more preferably 1.90 to 3.00, and still more preferably 2.00 to 3.00.

In the solid electrolyte (I) containing one or more kinds (preferably two or more kinds) of the above-described elements (E), in a case where the molar amount of O is represented by setting the molar amount of B in the solid electrolyte (I) to 4.00, the molar amount of O is preferably 6.23 to 25.00. That is, in a case where the molar content amount of B is set to 4.00, the relative value of the molar content amount of O is preferably 6.23 to 25.00. Among these, in a case where the molar amount of O is represented by setting the molar amount of B in the solid electrolyte (I) to 4.00, the molar amount of O is preferably 6.50 to 23.00, more preferably 8.00 to 23.00, still more preferably 10.00 to 23.00, and particularly preferably 10.00 to 18.00.

In the solid electrolyte (I) containing one or more kinds (preferably two or more kinds) of the above-described elements (E), in a case where the molar amount of the elements (E) is represented by setting the molar amount of B in the solid electrolyte (I) to 4.00, each molar amount of the elements (E) is preferably 0.001 to 10.00. That is, in a case where the molar content amount of B is set to 4.00, the relative value of each molar content amount of the elements (E) is preferably 0.001 to 10.00. Among these, in a case where the molar amount of the element (E) is represented by setting the molar amount of B in the solid electrolyte (I) to 4.00, each molar amount of the elements (E) is preferably 0.001 to 6.00 and more preferably 0.01 to 5.00.

Examples of one suitable aspect of the element composition of the solid electrolyte (I) containing one or more kinds (preferably two or more kinds) of the above-described elements (E) include a solid electrolyte containing Li, B, O, F, S, and N, in which, in a case where the molar amount B is set to 4.00, the molar amount of Li is 1.58 to 3.49 (preferably 1.58 to 3.00, more preferably 1.90 to 3.00, and still more preferably 2.00 to 3.00), the molar amount of O is 6.23 to 25.00 (preferably 6.50 to 23.00, more preferably 8.00 to 23.00, still more preferably 10.00 to 23.00, and particularly preferably 10.00 to 18.00), the molar amount of F is 0.001 to 10.00 (preferably 0.01 to 10.00), the molar amount of S is 0.001 to 2.00 (preferably 0.01 to 2.00), and the molar amount of N is 0.001 to 1.00 (preferably 0.005 to 1.00).

The solid electrolyte (I) contained in the all-solid-state secondary battery member is preferably in the above-described amorphous state, and as a result, it is preferable that the solid electrolyte (I) exhibits the following characteristics in addition to the above-described X-ray diffraction characteristics.

(Solid $^7$Li-NMR spectral characteristics)

In the solid electrolyte (I), a proportion of a full-width at half maximum, which is calculated by the following method from a spectrum obtained by performing a solid $^7$Li-NMR measurement at 20°C and 120°C, is preferably 50% or less, more preferably 40% or less, and still more preferably 35% or less. The lower limit thereof is not particularly limited, but is usually 10% or more.

The above-described proportion of the full-width at half maximum is obtained by performing a solid $^7$Li-NMR measurement of the solid electrolyte (I) at each of 20°C and 120°C; determining a full-width at half maximum (full-width 1 at half maximum) of a peak in which a chemical shift appears in a range of -100 to +100 ppm in a spectrum obtained by a measurement at 20°C, and a full-width at half maximum (full-width 2 at half maximum) of a peak in which a chemical shift appears in a range of -100 to +100 ppm in a spectrum obtained by a measurement at 120°C; and then calculating a percentage of a proportion of the full-width 2 at half maximum to the full-width 1 at half maximum {(Full-width 2 at half maximum/Full-width 1 at half maximum) $\times$ 100 (%)}. The full-width at half maximum (FWHM) of the peak means a width (ppm) at a point (H/2) of 1/2 of a height (H) of the peak.

Hereinafter, the above-described characteristic will be described with reference to Fig. 4. Fig. 4 shows an example of the spectrum obtained in a case where the solid $^7$Li-NMR measurement of the solid electrolyte (I) is performed at 20°C or 120°C. The spectrum shown on the lower side by the solid line in Fig. 4 is a spectrum obtained in a case where the solid $^7$Li-NMR measurement is performed at 20°C; and the spectrum shown on the upper side by the broken line in Fig. 4 is a spectrum obtained in a case where the solid $^7$Li-NMR measurement is performed at 120°C.

Generally, in the solid $^7$Li-NMR measurement, in a case where mobility of $Li^+$ is high, the peak to be obtained is a sharper peak. In the aspect shown in Fig. 4, in a case where the spectrum at 20°C and the spectrum at 120°C are compared, the spectrum at 120°C is sharper. That is, in the aspect shown in Fig. 4, it is indicated that the mobility of $Li^+$ is high due to the presence of Li defects. It is conceived that such a solid electrolyte (I) is likely to be plastically deformed due to the above-described defect structure, and thus has excellent hopping property of $Li^+$.

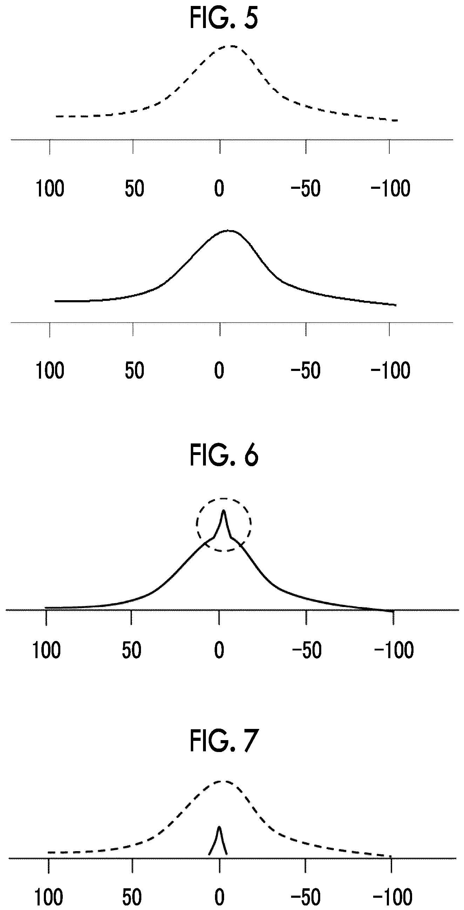

For reference, in a case where a general lithium tetraborate crystal is subjected to the solid $^7$Li-NMR measurement at 20°C or 120°C, the spectrum measured at 20°C shown by the solid line, shown on the lower side of Fig. 5, and the spectrum measured at 120°C shown by the broken line, shown on the upper side of Fig. 5, tends to have substantially the same shape. That is, the lithium tetraborate crystal has no Li defects and the like, and as a result, it has a high elastic modulus and is hardly plastically deformed.

Conditions for the above-described solid $^7$Li-NMR measurement are as follows.

The measurement is performed by a single pulse method using a 4 mm HX CP-MAS probe, 90° pulse width: 3.2 $\mu$s, observation frequency: 155.546 MHz, observation width: 1397.6 ppm, repetition time: 15 sec, integration: 1 time, and MAS rotation speed: 0 Hz.

In addition, in the solid electrolyte (I), in a case where a first peak appearing in a range of -100 to +100 ppm in the spectrum obtained in a case where the solid $^7$Li-NMR measurement is performed at 20°C is waveform-separated, it is preferable that a second peak having a full-width at half maximum of 5 ppm or less appears in a range with a chemical shift of -3 to +3 ppm, and a proportion of an area intensity of the second peak to an area intensity of the first peak is 0.5% or more. The above-described proportion of the area intensity is more preferably 2% or more, still more preferably 5% or more, particularly preferably 10% or more, and most preferably 15% or more. In the aspect of the present invention in which the solid electrolyte (I) contains water, the solid $^7$Li-NMR spectral characteristics of the solid electrolyte (I) tend to be as described above. The upper limit of the above-described proportion of the area intensity is not particularly limited, but is usually 50% or less.

Hereinafter, the above-described characteristic will be described with reference to Figs. 6 and 7.

Fig. 6 shows an example of the spectrum obtained in a case where the solid $^7$Li-NMR measurement of the solid electrolyte (I) is performed at 20°C. As shown in Fig. 6, in the solid electrolyte (I), a peak (corresponding to the first peak) is observed in a range of -100 to +100 ppm, and a small peak is observed in the vicinity of a chemical shift of 0 ppm, as shown by the broken line at the first peak. As described above, it is considered to be affected the fact that a sharp peak is observed in a case where the mobility of $Li^+$ is high.

Next, Fig. 7 shows a diagram in a case where the first peak is waveform-separated. As shown in Fig. 7, the first peak is waveform-separated into a small peak (corresponding to the second peak) represented by the solid line, and a large peak represented by the broken line. The above-described second peak is a peak which appears in a range with a chemical shift of -3 to +3 ppm, and has a full-width at half maximum of 5 ppm or less.

In the solid electrolyte (I), it is preferable that the proportion of the area intensity of the second peak shown by the solid line in Fig. 7 to the area intensity of the first peak (peak before the waveform separation) shown in Fig. 6 {(Area intensity of second peak/Area intensity of first peak) $\times$ 100 (%)} is within the above-described range.

Examples of the method of waveform separation include a method using a known software, and examples of the software include Igor Pro, which is graph processing software manufactured by WaveMetrics, Inc.

(Raman spectral characteristics)

In the solid electrolyte (I), a coefficient of determination, which is obtained by performing linear regression analysis according to a least-squares method in a wave number range of 600 to 850 cm$^{-1}$ in a Raman spectrum of the solid electrolyte (I), is preferably 0.9400 or more and more preferably 0.9600 or more, and also preferably 0.9800 or more. The upper limit thereof is not particularly limited, but is usually 1.0000 or less.

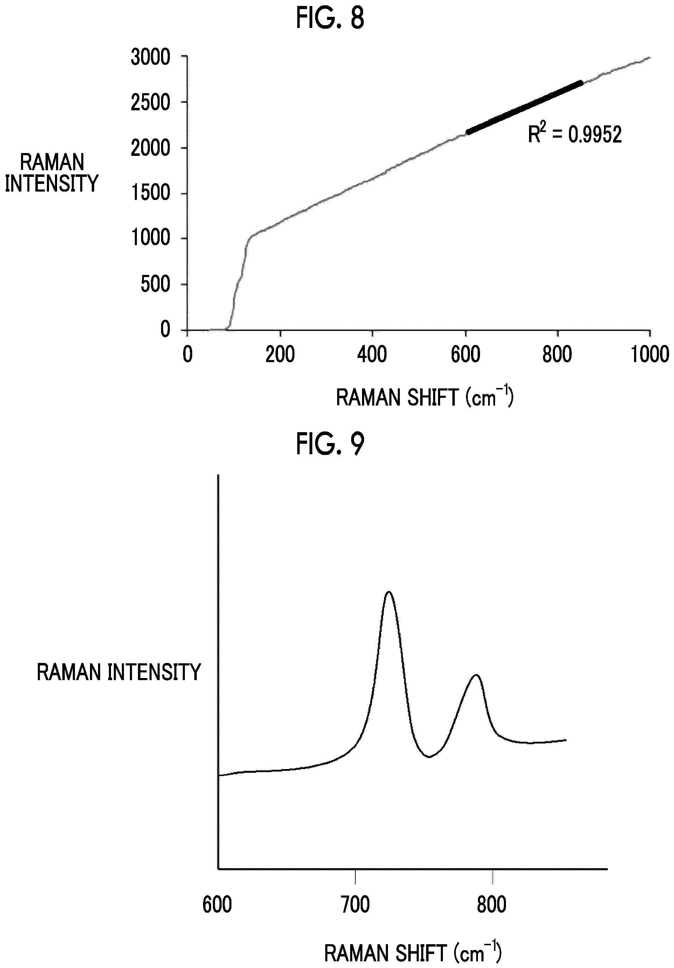

The above-described Raman spectral characteristics will be described with reference to Fig. 8.

First, a Raman spectrum of the solid electrolyte (I) is acquired. Raman imaging is performed as the measuring method of the Raman spectrum. The Raman imaging is a microscopic spectroscopy method which combines Raman spectroscopy with a microscopic technique. Specifically, the Raman imaging is a method of scanning a sample with excitation light to detect measurement light including Raman scattered light, and then visualizing distribution or the like of components based on the intensity of the measurement light.

The measurement conditions for the Raman imaging are as follows: an environment of atmospheric air of 27°C, an excitation light of 532 nm, an objective lens of 100 magnifications, a point scanning according to the mapping method, a step of 1 $\mu$m, an exposure time per point of 1 second, the number of times of integration of 1, and a measurement range of a range of 70 $\mu$m $\times$ 50 $\mu$m. However, the measurement range may be narrower depending on a film thickness of the sample.

In addition, the Raman spectrum data is subjected to a principal component analysis (PCA) processing to remove noise. Specifically, in the principal component analysis processing, the spectrum is recombined using components having an autocorrelation coefficient of 0.6 or more.

Fig. 8 shows an example of the Raman spectrum of the solid electrolyte (I). In the graph shown in Fig. 8, the vertical axis indicates the Raman intensity, and the lateral axis indicates the Raman shift. A coefficient of determination (coefficient of determination $R^2$) obtained by performing linear regression analysis according to a least-squares method is calculated in a wave number range of 600 to 850 cm$^{-1}$ of the Raman spectrum shown in Fig. 8. That is, in a wave number range of 600 to 850 cm$^{-1}$ in the Raman spectrum of Fig. 8, a regression line (the thick broken line in Fig. 8) is determined according to the least-squares method, and the coefficient of determination $R^2$ of the regression line is calculated. As the coefficient of determination, a value between 0 (no linear correlation) and 1 (complete linear correlation of the measured values) is taken according to the linear correlation of the measured values.

In the solid electrolyte (I), a peak is not substantially observed in the wave number range of 600 to 850 cm$^{-1}$ as shown in Fig. 8, and as a result, a high coefficient of determination is exhibited.

The above-described coefficient of determination $R^2$ corresponds to the square of the correlation coefficient (Pearson's product-moment correlation coefficient). More specifically, in the present specification, the coefficient of determination $R^2$ is calculated according to the following expression. In the expression, $x_1$ and $y_1$ represent a wave number in the Raman spectrum and a Raman intensity corresponding to the wave number; $x_2$ represents the (arithmetic) average of the wave numbers; and $y_2$ represents the (arithmetic) average of the Raman intensities.

$$R^2 = \frac{\left( \sum (x_1 - x_2) \cdot (y_1 - y_2) \right)^2}{\sum (x_1 - x_2)^2 \cdot \sum (y_1 - y_2)^2}$$

On the other hand, for reference, Fig. 9 shows a Raman spectrum of a general lithium tetraborate crystal. As shown in Fig. 9, in a case of a general lithium tetraborate crystal, peaks are observed in a wave number range of 716 to 726 cm$^{-1}$ and a wave number range of 771 to 785 cm$^{-1}$, derived from the structure thereof. With the peaks, the coefficient of determination thereof is less than 0.9400 in a case where the coefficient of determination is calculated by performing linear regression analysis according to a least-squares method in a wave number range of 600 to 850 cm$^{-1}$.

That is, the fact that the coefficient of determination is 0.9400 or more means that the solid electrolyte (I) does not substantially include a crystal structure. Therefore, as a result, it is considered that the solid electrolyte (I) has a characteristic of easily undergoing plastic deformation and a characteristic of excellent hopping property of ions such as Li+.

(Infrared absorption spectral characteristics)

In an infrared absorption spectrum of the solid electrolyte (I), a value of a ratio of a maximum absorption intensity in a wave number range of 3,000 to 3,500 cm$^{-1}$ to a maximum absorption intensity in a wave number range of 800 to 1,600 cm$^{-1}$ (Maximum absorption intensity in wave number range of 3000 to 3500 cm$^{-1}$/Maximum absorption intensity in wave number range of 800 to 1600 cm$^{-1}$) is preferably 1/5 or more (0.2 or more). Among these, the above-described ratio is preferably 3/10 or more and more preferably 2/5 or more. The upper limit thereof is not particularly limited, but is preferably 1 or less.

In the infrared absorption spectrum, an O-H stretching vibration mode is observed in a wave number range of 3,000 to 3,500 cm$^{-1}$, and a B-O stretching vibration mode is observed in a wave number range of 800 to 1,600 cm$^{-1}$. In the solid electrolyte (I), a strong absorption intensity derived from the O-H stretching vibration mode is observed, and it is confirmed that a large number of OH groups and/or a large amount of water are contained. In such a solid electrolyte (I), ions such as lithium ions tend to move easily, and as a result, the ion conductivity tends to be improved.

In the wave number range of 800 to 1,600 cm$^{-1}$, a vibration mode derived from the lithium salt can also be observed.

Measurement conditions for the above-described infrared absorption spectrum can be as follows.

The measurement is performed using objective lens: Cassegrain type (NA: 0.65) of 32 magnifications, detector: MCT-A, measurement range: 650 to 4,000 cm$^{-1}$, resolution: 4 cm$^{-1}$, and sample cell: diamond cell.

The obtained infrared absorption spectrum is subjected to correction for removing signals derived from water and $CO_2$ in the air, and the background is further subjected to offset-correction to set the absorption intensity to 0. In addition, the measurement is performed in the air after vacuum drying at 40°C for 2 hours.

The ion conductivity (27°C) of the solid electrolyte (I) is not particularly limited, and from the viewpoint of application to various applications, it is preferably $1.0 \times 10^{-5}$ S/cm or more, more preferably $1.0 \times 10^{-4}$ S/cm or more, still more preferably $1.0 \times 10^{-3}$ S/cm or more, and particularly preferably $3.0 \times 10^{-3}$ S/cm or more. The upper limit thereof is not particularly limited, but is usually $1.0 \times 10^{-2}$ S/cm or less.

In addition, it is also preferable that the solid electrolyte (I) exhibits the following characteristics or physical properties.

(Mass reduction rate)

A mass reduction rate in a case where the solid electrolyte (I) is heated to 800°C is preferably 20% to 40% by mass and more preferably 25% to 35% by mass. It is considered that the mass reduction by the above-described heating is due to removal of moisture contained in the solid electrolyte (I). In a case where the solid electrolyte (I) contains such moisture, the conductivity of lithium ions can be further improved.

In the above-described heating treatment, the heating is performed at a temperature rising rate of 20 °C/sec in a range of 25°C to 800°C. A known thermogravimetric differential thermal analysis (TG-DTA) device can be used for measuring the mass reduction rate. The above-described mass reduction rate is calculated by {(Mass at 25°C - Mass at 800°C)/Mass at 25°C} $\times$ 100.

In the measurement of the mass reduction rate, the solid electrolyte (I) is subjected to vacuum drying at 40°C for 2 hours in advance. In addition, the measurement of the mass reduction rate is performed in the air.

The solid electrolyte layer may contain one or two or more kinds of solid electrolytes.

A content of the solid electrolyte in the solid electrolyte layer is not particularly limited, and can be set to 100% by mass, but it is preferably 50% to 99.9% by mass, more preferably 70% to 99.5% by mass, and still more preferably 90% to 99% by mass.

The solid electrolyte layer may contain a component (other components) other than the solid electrolyte. For example, one kind or two or more kinds of the conductive auxiliary agent, the binder, the lithium salt, and the like described above can be contained. A content of these components is not particularly limited, but can be set to be the same as the content in the positive electrode active material layer described above.

A thickness of the solid electrolyte layer is not particularly limited, and for example, it is preferably 10 to 1,000 $\mu$m, more preferably 20 to 500 $\mu$m, and still more preferably 30 to 100 $\mu$m.

<Negative electrode active material layer>

The negative electrode active material layer is a layer formed in a layer shape with a negative electrode active material or with a negative electrode active material, a solid electrolyte, preferably a conductive auxiliary agent, and the above-described other components within a range where the effect of the present invention is not impaired. The negative electrode active material layer may not contain the conductive auxiliary agent, other components, and the like. The negative electrode active material layer usually does not contain a positive electrode active material.

(Solid electrolyte)

In a case where the negative electrode active material layer contains a solid electrolyte (generally, an inorganic solid electrolyte), the type of the solid electrolyte is not particularly limited; and an oxide-based solid electrolyte, a halide-based solid electrolyte, or a hydride-based solid electrolyte can be used, and a sulfide-based solid electrolyte can also be used within a range where the effect of the present invention is not impaired. From the viewpoint of prioritizing high safety in a case of performing the method in the air, an oxide-based solid electrolyte can be used, and from the viewpoint of workability and recovery efficiency, it is preferable to use the above-described oxide-based solid electrolyte (solid electrolyte (I)).

The negative electrode active material layer may contain one or two or more kinds of solid electrolytes.

A content of the solid electrolyte in the negative electrode active material layer is not particularly limited, and is preferably 50% to 99.9% by mass, more preferably 70% to 99.5% by mass, and still more preferably 90% to 99% by mass, as the total content of the solid electrolyte and the negative electrode active material.

(Negative electrode active material)

As the negative electrode active material itself, a negative electrode active material which can be used for a typical all-solid-state secondary battery can be widely used. A suitable aspect of the negative electrode active material will be described below.

The negative electrode active material is an active material capable of intercalating and deintercalating an ion of a metal belonging to Group 1 or Group 2 of the periodic table, and an active material capable of reversibly intercalating and deintercalating lithium ions is preferable.

The negative electrode active material is not particularly limited, and examples thereof include a carbonaceous material, an oxide of a metal element or a metalloid element, a lithium single substance, a lithium alloy, and a negative electrode active material capable of forming an alloy with lithium.

The carbonaceous material used as the negative electrode active material is a material substantially consisting of carbon. Examples thereof include petroleum pitch; carbon black such as acetylene black (AB); graphite (natural graphite and artificial graphite such as vapor-grown graphite); and carbonaceous material obtained by baking various synthetic resins such as a polyacrylonitrile (PAN)-based resin and a furfuryl alcohol resin.

Furthermore, examples thereof also include various carbon fibers such as PAN-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber; mesophase microspheres, graphite whisker, and tabular graphite.

These carbonaceous materials can be classified into non-graphitizable carbonaceous materials (also referred to as "hard carbon") and graphitizable carbonaceous materials, based on the graphitization degree.

In addition, it is preferable that the carbonaceous material has a surface spacing, density, or crystallite size described in JP1987-022066A (JP-S62-022066A), JP1990-006856A (JP-H2-006856A), and JP1991-045473A (JP-H3-045473A). The carbonaceous material is not necessarily a single material, and for example, may be a mixture of natural graphite and artificial graphite described in JP1993-090844A (JP-H5-090844A) or graphite having a coating layer described in JP1994-004516A (JP-H6-004516A).

The carbonaceous material is preferably hard carbon or graphite, and more preferably graphite.

The oxide of a metal element or a metalloid element, which can be used as the negative electrode active material, is not particularly limited as long as it is an oxide capable of intercalating and deintercalating lithium; and examples thereof include an oxide of a metal element (metal oxide), a composite oxide of a metal element, a composite oxide of a metal element and a metalloid element, and an oxide of a metalloid element (a metalloid oxide). The composite oxide of a metal element and the composite oxide of a metal element and a metalloid element are also collectively referred to as a metal composite oxide.

Preferred examples of these oxides include an iron oxide such as $Fe_3O_4$, and an amorphous oxide is also preferable. Furthermore, a chalcogenide which is a reaction product between a metal element and an element of Group 16 of the periodic table is also preferable.

In the present invention, the metalloid element refers to an element having intermediate properties between those of a metal element and a non-metalloid element, and typically, the metalloid element includes six elements including boron, silicon, germanium, arsenic, antimony, and tellurium, and further includes three elements including selenium, polonium, and astatine.

In addition, the "noncrystalline" means an oxide having a broad scattering band with an apex in a range of 20° to 40° in terms of the 2θ value in case of being measured by an X-ray diffraction method using a CuKα ray, and the oxide may have a crystalline diffraction line. The highest intensity in a crystalline diffraction line observed in a range of 40° to 70° in terms of the 2θ value is preferably 100 times or less and more preferably 5 times or less with respect to the intensity of a diffraction line at the apex in a broad scattering band observed in a range of 20° to 40° in terms of the 2θ value, and it is still more preferable that the oxide does not have a crystalline diffraction line.

In the compound group consisting of the noncrystalline oxides and the chalcogenides described above, the noncrystalline oxide of a metalloid element or the above-described chalcogenide is more preferable; and a (composite) oxide consisting of one element or a combination of two or more elements selected from elements (for example, Al, Ga, Si, Sn, Ge, Pb, Sb, and Bi) of Group 13 (IIIB) to Group 15 (VB) of the periodic table or the chalcogenide is particularly preferable.

The noncrystalline oxide and the chalcogenide are preferably $Ga_2O_3$, $GeO$, $PbO$, $PbO_2$, $Pb_2O_3$, $Pb_2O_4$, $Pb_3O_4$, $Sb_2O_3$, $Sb_2O_4$, $Sb_2O_8Bi_2O_3$, $Sb_2O_8Si_2O_3$, $Sb_2O_5$, $Bi_2O_3$, $Bi_2O_4$, $GeS$, $PbS$, $PbS_2$, $Sb_2S_3$, or $Sb_2S_5$.

As a negative electrode active material which can be used in combination with the noncrystalline oxide mainly using Sn, Si, or Ge, a carbonaceous material capable of intercalating and deintercalating lithium ions or lithium metal, a lithium single substance, a lithium alloy, or a negative electrode active material capable of forming an alloy with lithium is preferable.

From the viewpoint of high current density charging and discharging characteristics, it is preferable that the oxide of a metal element or a metalloid element (particularly, the metal (composite) oxide) and the above-described chalcogenide contains at least one of titanium or lithium as a constitutional component.

Examples of the metal composite oxide containing lithium (lithium composite metal oxide) include a composite oxide of lithium oxide and the above-described metal composite oxide or the above-described chalcogenide. More specific examples thereof include $Li_2SnO_2$.

It is also preferable that the negative electrode active material (for example, the metal oxide) contains a titanium element (a titanium oxide). Specifically, $Li_4Ti_5O_{12}$ (lithium titanium oxide [LTO]) is preferable from the viewpoint that the volume variation during the intercalation and deintercalation of lithium ions is small, and thus high-speed charging and discharging characteristics are excellent, and deterioration of electrodes is suppressed, whereby it is possible to improve life of the all-solid-state secondary battery.

The lithium alloy as the negative electrode active material is not particularly limited as long as it is typically used as a negative electrode active material for an all-solid-state secondary battery, and examples thereof include a lithium aluminum alloy.

The negative electrode active material capable of forming an alloy with lithium is not particularly limited as long as it is typically used as a negative electrode active material for an all-solid-state secondary battery. Examples of the above-described negative electrode active material include a negative electrode active material (alloy) containing a silicon element or a tin element and a metal such as Al and In; and a negative electrode active material containing a silicon element (silicon element-containing active material) capable of exhibiting high battery capacity is preferable, and a silicon element-containing active material in which a content of the silicon element is 50 mol% or more with respect to all constitutional elements is more preferable.

In general, a negative electrode containing the negative electrode active material (for example, an Si negative electrode containing the silicon element-containing active material or an Sn negative electrode containing an active material containing a tin element) can intercalate a larger amount of Li ions than a carbon negative electrode (for example, graphite or acetylene black). That is, the amount of Li ions intercalated per unit mass increases. Therefore, it is possible to increase the battery capacity. As a result, there is an advantage in that the battery driving duration can be extended.

Examples of the silicon element-containing active material include a silicon-containing alloy (for example, $LaSi_2$, $VSi_2$, La-Si, Gd-Si, or Ni-Si) containing a silicon material such as Si and SiOx ($0 < x \leq 1$) and further containing titanium, vanadium, chromium, manganese, nickel, copper, or lanthanum; and a structured active material thereof (for example, $LaSi_2/Si$). In addition, examples thereof include an active material containing a silicon element and a tin element, such as $SnSiO_3$ and $SnSiS_3$. Since SiOx itself can be used as the negative electrode active material (the metalloid oxide) and Si is produced along with the operation of the all-solid-state secondary battery, $SiO_x$ can be used as a negative electrode active material (or a precursor material thereof) capable of forming an alloy with lithium.

Examples of the negative electrode active material containing a tin element include Sn, SnO, $SnO_2$, SnS, $SnS_2$, and the above-described active material containing a silicon element and a tin element.

From the viewpoint of battery capacity, the negative electrode active material is preferably the negative electrode active material capable of forming an alloy with lithium, more preferably the above-described silicon material or the above-described silicon-containing alloy (alloy containing a silicon element), and still more preferably silicon (Si) or a silicon-containing alloy.

It is also preferable to use a titanium niobium composite oxide as the negative electrode active material. It is expected that the titanium niobium composite oxide has a high theoretical volume capacity density, long life, and possibility of rapid charging. Examples of the titanium niobium composite oxide include $TiNb_2O_7$ (TNO).

A shape of the negative electrode active material is not particularly limited, but is preferably a particle shape. A volume average particle size of the negative electrode active material is not particularly limited, and it is preferably 0.1 to 50 $\mu$m, more preferably 1.0 to 20 $\mu$m, and still more preferably 3.0 to 15 $\mu$m.

The volume average particle size is measured according to the following procedure.

Using water (in a case of being unstable in water, heptane), the negative electrode active material is diluted in a 20 mL sample bottle to prepare a 1% by mass dispersion liquid. The diluted dispersion liquid sample is irradiated with 1 kHz ultrasonic waves for 10 minutes, and then immediately used for test. Data collection is performed 50 times with the dispersion liquid sample using a laser diffraction/scattering-type particle size distribution analyzer LA-920 (product name, manufactured by Horiba Ltd.) and a quartz cell for measurement at a temperature of 25°C, thereby obtaining the volume average particle size. For other detailed conditions and the like, Japanese Industrial Standards (JIS) Z 8828: 2013 "Particle Diameter Analysis-Dynamic Light Scattering" is referred to as necessary. Five samples are produced for each level, and the average value thereof is adopted.

A surface of the negative electrode active material may be coated with an oxide such as another metal oxide and a carbon-based material.

Examples of the surface coating agent include a metal oxide containing Ti, Nb, Ta, W, Zr, Al, Si, or Li. Examples thereof include titanium oxide spinel, tantalum-based oxides, niobium-based oxides, and lithium niobate-based compounds; and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, $B_2O_3$, and $Li_3AlF_6$. In addition, a carbon-based material such as C, SiC, and SiOC (carbon-added silicon oxide) can also be used as the surface coating material.

In addition, the surface of the negative electrode active material may be subjected to a surface treatment with sulfur or phosphorus.

Furthermore, the surface of the negative electrode active material may be subjected to a surface treatment with an actinic ray or an active gas (for example, plasma) before or after the above-described surface coating.

The negative electrode active material layer may contain one or two or more kinds of the negative electrode active material.

A content of the negative electrode active material in the negative electrode active material layer is not particularly limited, and is preferably 10% to 90% by mass, more preferably 20% to 85% by mass, still more preferably 30% to 80% by mass, and even more preferably 40% to 75% by mass.

The negative electrode active material layer may contain one kind or two or more kinds of components (other components) other than the solid electrolyte and the active material. Examples of the other components include those described in the positive electrode active material layer, and a content thereof is also as described above.

A thickness of the negative electrode active material layer is not particularly limited, and for example, it is preferably 10 to 1,000 $\mu$m, more preferably 20 to 500 $\mu$m, and still more preferably 50 to 300 $\mu$m.

<Negative electrode collector>

The collector constituting the negative electrode layer is an electron conductor. **In** addition, the negative electrode collector is usually in a form of a film sheet.

Examples of a constitutional material of the negative electrode collector include aluminum, copper, a copper alloy, stainless steel, nickel, and titanium; and aluminum, copper, a copper alloy, or stainless steel is preferable. Examples of the negative electrode collector also include a collector having a coating layer (thin film) of carbon, nickel, zinc, titanium, aluminum, gold, or silver on a surface of aluminum, copper, a copper alloy, or stainless steel.

**In** a case where the negative electrode collector also functions as the negative electrode active material layer (in other words, in a case where the negative electrode active material layer also functions as the negative electrode collector), it is not necessary to include two layers of the negative electrode collector and the negative electrode active material layer, and a single layer configuration may be adopted.

A thickness of the negative electrode collector is not particularly limited, but can be set to 1 to 500 $\mu$m, preferably 10 to 100 $\mu$m.

In the present invention, in a case where the positive electrode active material layer or the negative electrode active material layer contains the solid electrolyte, the solid electrolytes contained in the positive electrode active material layer, the solid electrolyte layer, and the negative electrode active material layer may be the same or different from each other, but are preferably the above-described oxide-based solid electrolyte.

<Other configurations>

In the present invention, a functional layer which is appropriately applied to the all-solid-state secondary battery may be provided between the respective layers of the negative electrode collector, the negative electrode active material layer, the solid electrolyte layer, the positive electrode active material layer, and the positive electrode collector, or outside the respective layers; or a member such as a housing or a package may be provided.

<Manufacturing of all-solid-state secondary battery>

The all-solid-state secondary battery can be manufactured with reference to a general manufacturing method of an all-solid-state secondary battery, except that the above-described oxide-based solid electrolyte (solid electrolyte (I)) is used as the solid electrolyte constituting the active material layer containing an active material as a recovery target. That is, the manufacturing of an all-solid-state secondary battery can be performed by including a step of obtaining a laminate in which a positive electrode active material layer, a solid electrolyte layer, and a negative electrode active material layer are arranged in this order. Here, an amount of water used in the solid electrolyte (I) may satisfy or not satisfy the amount specified in the present invention. In the manufacturing method of an all-solid-state secondary battery, the amount of water used in the solid electrolyte (I) is not regarded; but in order to set the amount of water of the solid electrolyte (I) contained in the constitutional layer such as the active material layer to the amount specified in the present invention, a step of subjecting the formed constitutional layer to a drying treatment can also be included as necessary. The drying step of the constitutional layer may be performed at any stage after the constitutional layer is formed, as long as the solid electrolyte (I) of the constitutional layer in the secondary battery to be obtained can be set to the water amount specified in the present invention. In order to more reliably set the water amount specified in the present invention, it is preferable to performing the drying treatment on the laminate in which the positive electrode active material layer, the solid electrolyte layer, and the negative electrode active material layer are arranged in this order at least a state in which the laminate is disposed in a battery cell. The drying method is not particularly limited, and for example, the water amount of the solid electrolyte (I) in the constitutional layer can be reduced to within the range specified in the present invention by using a desiccator, subjecting the constitutional layer to vacuum drying, subjecting the constitutional layer to freeze vacuum drying, or subjecting the constitutional layer to a heating treatment.

The all-solid-state secondary battery is preferably a battery obtained by sealing a laminate in which the positive electrode collector, the positive electrode active material layer, the solid electrolyte layer, the negative electrode active material layer, and the negative electrode collector are arranged in this order. By the sealing, it is possible to more reliably prevent the mixing of moisture into the constitutional layer after the above-described drying step. The sealing method is not particularly limited as long as the mixing of moisture (atmosphere) can be blocked or suppressed. Examples thereof include a method of sealing the above-described laminate by closing a lid of a housing (battery cell) storing the laminate using a gasket such as an O-ring. Furthermore, cell resistance can also be improved by heating the obtained laminate (for example, at 80°C for 2 hours).

In addition, a method of forming the laminate in which the positive electrode collector, the positive electrode active material layer, the solid electrolyte layer, the negative electrode active material layer, and the negative electrode collector are arranged in this order is not particularly limited; and examples of a method of forming each of the constitutional layers include formation by applying a dispersion liquid and powder compaction molding.

Examples of one aspect of the manufacturing method of an all-solid-state secondary battery include a manufacturing method including applying a dispersion liquid of the solid electrolyte (I) to form a constitutional layer, particularly an active material layer. Since the solid electrolyte (I) can be easily prepared as an aqueous dispersion liquid (solid electrolyte slurry), the method can be adopted. Specifically, the positive electrode active material layer and the negative electrode active material layer can be formed by applying a dispersion liquid of the active material and the solid electrolyte (I), respectively. In a case where other components such as the conductive auxiliary agent are contained as components other than the active material, a dispersion liquid in which these components are also dispersed is used.

A dispersion medium in the dispersion liquid of the solid electrolyte (I) and the dispersion liquid of the active material can be appropriately selected in consideration of reactivity with the components contained in the dispersion liquid. For example, in a case of containing the solid electrolyte (I), it is preferable to use an aqueous dispersion liquid; and in a case of containing the sulfide-based solid electrolyte, it is preferable to use a dispersion system of an organic solvent.

Examples of the manufacturing method of the all-solid-state secondary battery include a method in which a composition for forming a positive electrode (positive electrode slurry) containing a positive electrode active material is applied onto a metal foil which is a positive electrode collector to form a positive electrode active material layer, a dispersion liquid for forming a solid electrolyte layer (solid electrolyte slurry) containing a solid electrolyte is applied onto the positive electrode active material layer to form a solid electrolyte layer, a composition for forming a negative electrode (negative electrode slurry) containing a negative electrode active material is applied onto the solid electrolyte layer to form a negative electrode active material layer, and a negative electrode collector (metal foil) is laminated on the negative electrode active material layer. The entire laminate is optionally subjected to a pressurization treatment to obtain the all-solid-state secondary battery as shown in Fig. 1. In addition, the all-solid-state secondary battery can also be manufactured by reversing the method of forming each layer, which includes forming the negative electrode active material layer, the solid electrolyte layer, and the positive electrode active material layer on the negative electrode collector, and optionally subjecting the entire laminate to a pressurization treatment.

Here, the solid electrolyte (I) is contained in the composition containing an active material to be recovered, and is contained in, for example, at least one of the composition for forming a positive electrode or the composition for forming a negative electrode, and may be further contained in a dispersion liquid for forming a solid electrolyte layer.

As another method, the all-solid-state secondary battery can also be manufactured by separately producing the positive electrode active material layer, the solid electrolyte layer, and the negative electrode active material layer, laminating these layers, and optionally pressurizing the laminate. In this case, in the formation of each layer, a support such as a nonwoven fabric may be disposed as necessary, and each layer can be made into a self-supporting film.

Examples of another aspect of the manufacturing method of an all-solid-state secondary battery include a manufacturing method including applying pressure to powder of the solid electrolyte (I) to form a constitutional layer, particularly an active material layer. The solid electrolyte (I) can be easily plastically deformed by pressure, is itself soft and plastically deformed, and acts like a binder, which contributes to the improvement of the bonding property between the solid particles or between the layers. Therefore, according to the method, it is possible to obtain a constitutional layer exhibiting high ion conductivity without a sintering treatment at a high temperature (in other words, without sintering).

Specifically, the positive electrode active material layer and the negative electrode active material layer can be formed by pressure-molding powder constituting each layer (the active material, solid electrolyte (I), and other components).

More specifically, the all-solid-state secondary battery can also be manufactured by pressurizing each of powders constituting each of the layers to have a predetermined shape to form pellets of each of the layers, and superimposing pellets on a collector of a positive electrode or a negative electrode and pressurizing the pellets. In this case, a powder constituting the positive electrode active material layer (hereinafter, referred to as a powder of a positive electrode mixture), a powder constituting the solid electrolyte layer (hereinafter, referred to as a powder of a solid electrolyte), and a powder constituting the negative electrode active material layer (hereinafter, referred to as a powder of a negative electrode mixture) are used.

For example, a pellet of the solid electrolyte is formed by filling a predetermined mold with the powder of the solid electrolyte and performing pressure molding; a pellet of the negative electrode mixture is formed by filling one surface of the obtained pellet of the solid electrolyte with the powder of the negative electrode mixture and performing pressure molding; a pellet of the positive electrode mixture is formed by filling the other surface of the obtained pellet of the solid electrolyte with the powder of the positive electrode mixture and performing pressure molding; and a compacted powder molded body in which the pellet of the positive electrode mixture, the pellet of the solid electrolyte, and the pellet of the negative electrode mixture are laminated in this order is obtained. Subsequently, in the obtained compacted powder molded body, the obtained pellet of the negative electrode mixture is superposed on the negative electrode collector (metal foil) such that the pellet is on the lower side, the positive electrode collector (metal foil) is superposed on the pellet of the positive electrode mixture such that the pellet is on the upper side, and the entire layer is subjected to a pressurization treatment, thereby obtaining the all-solid-state secondary battery as shown in Fig. 1.

A method of preparing the powder of the solid electrolyte is not particularly limited, and for example, the powder can be prepared by freeze vacuum-drying a dispersion liquid (solid electrolyte slurry) for forming a solid electrolyte layer containing a solid electrolyte.

The method of preparing the powder of the negative electrode mixture is not particularly limited, and the powder of the negative electrode mixture can be prepared, for example, by mixing the powder of the solid electrolyte prepared in advance with a component for forming the negative electrode active material layer containing a negative electrode active material.

The method of preparing the powder of the positive electrode mixture is not particularly limited, and the powder of the positive electrode mixture can be prepared, for example, by mixing the powder of the solid electrolyte prepared in advance with a component for forming the positive electrode active material layer containing a positive electrode active material.

Pressurization conditions in a case of producing the pellet of the negative electrode mixture, the pellet of the solid electrolyte, and the pellet of the positive electrode mixture are not particularly limited, and for example, the pellets can be produced by pressurization to a pressure of 50 to 300 MPa for approximately 10 seconds.

In addition, the compression bonding of the pellet of the negative electrode mixture and the negative electrode collector and the compression bonding of the pellet of the positive electrode mixture and the positive electrode collector can also be performed by pressurization of approximately 60 MPa.

The order of forming the pellets of each layer is not particularly limited, and for example, the pellets can be formed in the order of the pellet of the negative electrode mixture, the pellet of the solid electrolyte, and the pellet of the positive electrode mixture.

As another method, the all-solid-state secondary battery can also be manufactured by separately producing the pellet of the negative electrode mixture, the pellet of the solid electrolyte, and the pellet of the positive electrode mixture, superimposing the obtained pellets, and laminating the obtained pellets by pressing the obtained pellets so that the pellets are interposed between the collectors of the positive electrode and the negative electrode.

Here, the solid electrolyte (I) is contained in the mixture containing an active material to be recovered, and is contained in, for example, at least one of the positive electrode mixture or the negative electrode mixture, and may be further contained in powder of a solid electrolyte.

The manufacturing method of an all-solid-state secondary battery is not limited to the above-described methods as long as it can form a constitutional layer containing the solid electrolyte (I) together with the active material to be recovered.

It is preferable that the all-solid-state secondary battery is initialized after manufacturing or before use. The initialization method is not particularly limited, and it is possible to initialize the all-solid-state secondary battery by, for example, performing initial charging and discharging in a state in which a pressing pressure is increased and then releasing the pressure until the pressure falls within the range of the pressure condition at the time of using the all-solid-state secondary battery.

<Applications of all-solid-state secondary battery>

The all-solid-state secondary battery can be applied to various applications. The application aspect is not particularly limited, and in a case of being mounted in an electronic apparatus, examples thereof include a notebook computer, a pen-based input personal computer, a mobile personal computer, an e-book player, a mobile phone, a cordless phone handset, a pager, a handy terminal, a portable fax, a mobile copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, and a backup power supply. Additionally, in a case of being used for consumer applications, examples thereof include an automobile, an electric vehicle, a motor, a lighting instrument, a toy, a game device, a road conditioner, a watch, a strobe, a camera, and a medical device (a pacemaker, a hearing aid, a shoulder massage device, and the like). Furthermore, the secondary battery according to the embodiment of the present invention can be used for various military usages and universe usages. In addition, the secondary battery according to the embodiment of the present invention can also be combined with a solar battery.

[Recovery method according to embodiment of present invention]

The recovery method according to the embodiment of the present invention includes a step of bringing a member derived from the above-described all-solid-state secondary battery into contact with an aqueous medium, and a step of performing solid-liquid separation on the treated liquid obtained in the step.

<Contact step>

The aqueous medium used in the contact step is a medium containing water, and may contain a hydrophilic solvent or a water-soluble solvent in addition to the water. The water is not particularly limited, and (ultra)pure water, ion exchange water, or the like can be used. Examples of the hydrophilic solvent or the water-soluble solvent include alcohol solvents such as methanol and ethanol, ketone solvents such as acetone and methyl ethyl ketone, polyhydric alcohol solvents such as diethylene glycol and glycerin, and ether solvents such as propylene glycol monomethyl ether, dipropylene glycol monomethyl ether, diethylene glycol monoethyl ether, and diethylene glycol monobutyl ether. A content of the water-soluble solvent in the aqueous medium is not particularly limited, but is preferably 50% by mass or less. As the aqueous medium, water is preferably used.

A contact method is not particularly limited as long as it is a method in which the oxide-based solid electrolyte can be eluted (extracted) into the aqueous medium by bringing the all-solid-state secondary battery member into contact with the aqueous medium, and a general method can be appropriately adopted. Examples thereof include a method of immersing the all-solid-state secondary battery member in the aqueous medium, a method of allowing the aqueous medium to flow through the all-solid-state secondary battery member, and a method of spraying the aqueous medium onto the all-solid-state secondary battery member. Among these, the immersion method is preferable from the viewpoint of workability and recovery efficiency. In the immersion method, it is preferable to irradiate the aqueous medium in which the all-solid-state secondary battery member has been immersed with ultrasonic waves and to stir the aqueous medium, from the viewpoint that the elution of the oxide-based solid electrolyte can be promoted and the elution amount increases. Irradiation conditions of ultrasonic waves and stirring conditions are appropriately set.

Contact conditions are not particularly limited, but are appropriately set to conditions in which the oxide-based solid electrolyte can be eluted into the aqueous medium in consideration of workability, recovery efficiency, a contact method, and the like.

An amount of the aqueous medium used for the all-solid-state secondary battery member is not unambiguously determined by the difference in the contact method. For example, in an aqueous medium containing an oxide-based solid electrolyte, a concentration of the oxide-based solid electrolyte can be set to 10% by mass or less, and preferably 5% by mass or less. The amount of the aqueous medium used with respect to 1 g of the all-solid-state secondary battery member can be, for example, 10 g or more, preferably 20 g or more. More specifically, in the immersion method, the amount of the aqueous medium used is more preferably 100 to 1,000 g and still more preferably 10 to 100 g with respect to 1 g of the all-solid-state secondary battery member.

A temperature of the contact can be set to, for example, 10°C to 80°C, preferably 15°C to 60°C and more preferably 20°C to 40°C. The temperature of the contact usually refers to a temperature of the aqueous medium (in which the all-solid-state secondary battery member has been immersed), but in a case where the all-solid-state secondary battery member at the above-described temperature is immersed in the aqueous medium, the temperature of the all-solid-state secondary battery member can be used.

In addition, a time of the contact can be set to, for example, 0.5 to 60 minutes, preferably 1 to 30 minutes and more preferably 5 to 20 minutes.

The contact step can be performed under an appropriate environment, and for example, it can be performed under a special environment or in a special facility, which is usually adopted as a countermeasure against the generated toxic compound. **In** the method according to the embodiment of the present invention, since the all-solid-state secondary battery member containing the above-described oxide-based solid electrolyte is used, the contact step can be safely performed, and the contact step can also be performed in the air with excellent workability and the like by using the safety.

A pH of the aqueous medium is not particularly limited.

By bringing the all-solid-state secondary battery member into contact with the aqueous medium as described above, a treated liquid in which the oxide-based solid electrolyte is eluted from the active material layer of the all-solid-state secondary battery member into the aqueous medium and the active material is dispersed in the aqueous medium in a solid state is obtained.

<Solid-liquid separation step>

In the method according to the embodiment of the present invention, the treated liquid obtained in the contact step is subjected to solid-liquid separation. Here, the representative "solid-liquid separation" is described as a method of separating the aqueous medium and an insoluble component in the treated liquid, but in the present invention, the "solid-liquid separation" is not limited as long as the aqueous medium and the insoluble component can be separated. By the solid-liquid separation step, an insoluble component such as the active material dispersed in the treated liquid can be separated from a liquid component such as the aqueous medium, specifically, a dissolved component such as the oxide-based solid electrolyte (and other components) dissolved in the treated liquid.

As a solid-liquid separation method, a general solid-liquid separation method can be applied without particular limitation. From the viewpoint of workability, a filtration method is preferable. Examples of the filtration method include a natural filtration method, a reduced pressure filtration method (suction filtration method), a pressurized filtration method, and a centrifugal filtration method; and various filtration devices can be used.

Conditions for the solid-liquid separation are appropriately set, and a filter capable of collecting the target active material as a filtrate is used. The solid-liquid separation can be performed at an environmental temperature in a normal temperature range, for example, 15°C to 30°C, from the viewpoint of workability and the like. The solid-liquid separation step can be performed in a special environment or in a special equipment, or the like, as in the contact step, and can also be performed in the air.

The above-described contact step and solid-liquid separation step can be continuously performed, and in this case, for example, a mixing tank or the like equipped with the filter can be used.

In a case where the insoluble component contains a component other than the target active material, only the target active material can be subjected to the solid-liquid separation in the solid-liquid separation step; or the insoluble component can be collectively subjected to the solid-liquid separation in the solid-liquid separation step, and then the active material can be isolated from other components in an isolation step described later. Furthermore, in a case where a centrifugation method is adopted as the solid-liquid separation method, for example, two active materials can be separated as a precipitated component and a supernatant component, respectively, at the same time as the separation of the oxide-based solid electrolyte, by using a difference in density between the positive electrode active material and the negative electrode active material. Ultrafiltration conditions at this time cannot be unambiguously determined depending on the density of the two active materials to be separated, and can be appropriately set in consideration of the difference in density, and the like. For example, a rotation speed can be set to 2,000 to 150,000 rpm, and a treatment time can be set to 1 to 20 minutes.

<Other steps>

The method according to the embodiment of the present invention may include a step other than the above-described steps (referred to as "other steps").

The other steps are not particularly limited, and examples thereof include, as a pre-treatment step, a step of charging or discharging the all-solid-state secondary battery, a step of removing a housing, a package, or the like from the all-solid-state secondary battery, a step of obtaining the all-solid-state secondary battery member by disassembling, crushing, or the like the all-solid-state secondary battery, and a step of peeling off the collector from the all-solid-state secondary battery member.

In addition, examples thereof include, as a post-treatment step, a step of purifying the recovered product, a step of washing the recovered product, a step of drying the recovered product, a step of pulverizing or crushing the recovered product, and a step of classifying the recovered product. As the step of purifying the recovered product, for example, a recrystallization method, a reprecipitation method, a method using column chromatography, a method of removing an organic substance, and the like can be applied.

The above-described other steps can be performed by a typical method and conditions.

In a case where the recovered product obtained by the method according to the embodiment of the present invention contains a positive electrode active material and a negative electrode active material, and further contains a solid component such as a conductive auxiliary agent, a step of isolating the target active material from the recovered product can also be performed as a step different from the solid-liquid separation step. In the isolation step, an appropriate method can be applied depending on the type, characteristics, and the like of each component contained in the recovered product. From the viewpoint that it is possible to isolate with high purity and favorable workability, an isolation method (classification method) using a difference in specific gravity of the respective components is preferable; and specific examples thereof include a centrifugal separation method, an air separation method, and a sedimentation separation method. In addition, an isolation method (classification method) using a difference in particle diameter of the respective components can also be applied. In particular, in a case where particle size distributions of the respective components do not overlap, a simple classification method is preferable, and generally, each component is separated using a filter having intermediate particle retention of the particle size distribution of the component to be separated. On the other hand, in a case where the particle size distributions of the respective components overlap, an isolation method using a difference in specific gravity, particularly a centrifugal separation method is preferable.

In addition, since it is assumed that workability may be deteriorated in a case where the positive electrode active material and the negative electrode active material are separated with high purity, it is preferable to use an all-solid-state secondary battery member in which the positive electrode active material layer and the negative electrode active material layer are separated in advance, as far as possible.

The method according to the embodiment of the present invention, including the above-described steps, can be performed in the air with safety and simple operation, and the target active material can be recovered from the active material layer of the all-solid-state secondary battery member with high recovery efficiency. The recovery efficiency (recovery rate) in the method according to the embodiment of the present invention is not unambiguously determined depending on the method, conditions, and the like adopted in each step, but for example, it is possible to achieve 90% by mass or more, preferably 95% by mass or more with respect to 100% by mass of the active material contained in the active material layer.

In the method according to the embodiment of the present invention, LCO and NMC, which are representative and frequently used as the positive electrode active material for a secondary battery in recent years, can be recovered with high recovery efficiency. In particular, since the active material can be recovered as a compound with high purity, a recovered active material (regenerated active material) can be produced, and the recovered active material can be reused as it is.

In addition, in the method according to the embodiment of the present invention, the active material can be recovered by simply bringing the all-solid-state secondary battery member into contact with the aqueous medium, and thus the method can be performed in a simple manner and safe working step at a low cost, the environmental load is small, and the method can also be performed on an industrial scale.

Furthermore, the oxide-based solid electrolyte dissolved in the aqueous medium or the component thereof (for example, the above-described lithium-containing oxide) can also be easily recovered.

Examples

The present invention will be more specifically described based on Examples, but the present invention is not limited and interpreted to Examples. In the present invention, room temperature means 27°C. In addition, the following production of a solid electrolyte or production of a secondary battery was performed in an atmosphere in which moisture was present in the atmosphere.

[Reference Example 1: production by steps 0 and 1A to 3A described above]

Using a ball mill (manufactured by FRITSCH, planetary ball mill P-7), powdery $Li_2B_4O_7$ crystals (LBO powder) (manufactured by RARE METALLIC Co., Ltd.) were subjected to ball milling under the following conditions, pot: stabilized zirconia (YSZ) (45 mL), pulverization ball: YSZ (average particle diameter: 5 mm, number of balls: 50 balls), rotation speed: 370 revolutions per minute (rpm), amount of LBO powder: 1 g, atmosphere: air, and treatment time of ball milling: 100 hours, thereby obtaining a fined lithium-containing oxide (hereinafter, also referred to as "fine substance of the lithium-containing oxide").

0.05 g (which was 5% by mass with respect to the fine substance of the lithium-containing oxide) of LiFSI (chemical formula: $Li(FSO_2)_2N$) as a lithium salt was added to 1 g of the obtained fine substance of the lithium-containing oxide, and the mixture was further ball-milled for 100 hours. The obtained powder was added to water such that a powder concentration was 42% by mass, and the mixture was subjected to ultrasonic dispersion for 30 minutes. Subsequently, the obtained dispersion liquid was transferred to a glass petri dish, and dried at 120°C for 2 hours in the air to obtain a film of solid electrolyte. Subsequently, the obtained film was peeled off to obtain a powdery solid electrolyte (I)-1.

<Production and evaluation of molded body of solid electrolyte>

The powdery solid electrolyte (I)-1 obtained above was subjected to powder compaction molding at an effective pressure of 220 MPa at 27°C (room temperature) to obtain a molded body (a compacted powder body 1) of the solid electrolyte. A shape of the compacted powder body 1 was a columnar shape having a diameter of 10 mm and a thickness of 1 mm. As a result of measuring ion conductivity of the obtained compacted powder body 1, the ion conductivity of the compacted powder body 1 was $1.5 \times 10^{-4}$ S/cm at 27°C and $4.0 \times 10^{-4}$ S/cm at 60°C.

The above-described ion conductivity of the solid electrolyte (I)-1 was calculated by arranging two electrodes consisting of an In foil to sandwich the compacted powder body 1, measuring an alternating current impedance between both In electrodes in a measurement frequency range of 1 Hz to 1 MHz under conditions of a measurement temperature of 27°C or 60°C and an applied voltage of 50 mV, and then analyzing the arc diameter of the obtained Cole-Cole plot (Nyquist plot).

An X-ray diffraction measurement of the solid electrolyte (I)-1 was performed using a CuK$\alpha$ ray as described above. The measurement conditions were set to 0.01 °/step and 3 °/min. As a result, it was clarified that the above-described X-ray diffraction characteristics were satisfied, and it was found that the solid electrolyte (I)-1 was in an amorphous state.

Using the solid electrolyte (I)-1 obtained above, an X-ray total scattering measurement was performed with SPring-8L04B2 (acceleration voltage: 61.4 keV, wavelength: 0.2019 Å). The sample was sealed in a Capton capillary of 2 mm$\varphi$ or 1 mm$\varphi$, and the experiment was performed. The obtained data were subjected to Fourier transform as described above to obtain a reduced pair distribution function.

As a result of the analysis, in the reduced pair distribution function G(r) obtained from the X-ray total scattering measurement, it was confirmed that, in a range where r was 1 to 5 Å, a first peak in which G(r) of the peak top was more than 1.0 and the peak top was located at 1.43 Å and a second peak in which G(r) of the peak top was more than 1.0 and the peak top was located at 2.40 Å were observed.

On the other hand, in the solid electrolyte (I)-1, the peak attributed to the B-O interatomic distance and the B-B interatomic distance, observed in the general lithium tetraborate crystal, was maintained. The general lithium tetraborate crystal has a structure (diborate structure) in which a $BO_4$ tetrahedron and a $BO_3$ triangle are present at a ratio of 1:1, and it is presumed that this structure is maintained in the solid electrolyte (I)-1.

A proportion {(Full-width 2 at half maximum/Full-width 1 at half maximum) $\times$ 100} of a full-width at half maximum (full-width 2 at half maximum) of a peak in which a chemical shift appeared in a range of -100 to +100 ppm in a spectrum obtained in a case where the solid $^7$Li-NMR measurement of the solid electrolyte (I) obtained above was performed at 120°C with respect to a full-width at half maximum (full-width 1 at half maximum) of a peak in which a chemical shift appeared in a range of -100 to +100 ppm in a spectrum obtained in a case where the solid $^7$Li-NMR measurement of the solid electrolyte (I) obtained above was performed at 20°C was 33%.

In addition, in a case where the first peak appearing in a range of -100 to +100 ppm in the spectrum obtained in a case where the solid $^7$Li-NMR measurement was performed at 20°C was waveform-separated, a second peak having a full-width at half maximum of 5 ppm or less appeared in a range with a chemical shift of -3 to +3 ppm, and a proportion of an area intensity of the second peak to an area intensity of the first peak was 4%.

Using the solid electrolyte (I)-1 obtained above, an infrared absorption spectrum measurement was performed under the conditions described above, and as a result, in the obtained infrared absorption spectrum, a value of a ratio of a maximum absorption intensity in a wave number range of 3,000 to 3,500 cm$^{-1}$ to a maximum absorption intensity in a wave number range of 800 to 1,600 cm$^{-1}$ was 0.72.

In the Raman spectrum of the solid electrolyte (I)-1 obtained above, the coefficient of determination obtained by performing linear regression analysis according to a least-squares method in a wave number range of 600 to 850 cm$^{-1}$ was 0.9974.

The mass reduction rate of the solid electrolyte (I)-1 in a case of being heated from 25°C to 800°C as described above was 29.8%.

Regarding the analysis of each of elements in the obtained solid electrolyte (I)-1, quantitative analysis was performed by ICP-OES for lithium and boron or by combustion ion chromatography (combustion IC) for fluorine and sulfur, estimation was performed for N from the analytical mass of sulfur in consideration of the amount of each of atoms in the Li salt, the analytical masses of elements other than O were added together for O, and calculation was performed in terms of the difference from the total amount of the powder. The results are shown in the table below.

[Reference Example 2: production by steps 1B to 3B and method 2 described above]

1 g of the fine substance of the lithium-containing oxide used in Reference Example 1 was added to water such that a concentration of the fine substance was 42% by mass, and the mixture was subjected to ultrasonic dispersion for 30 minutes. 0.05 g (which was 5% by mass with respect to the fine substance of the lithium-containing oxide) of LiFSI (chemical formula: $Li(FSO_2)_2N$) as a lithium salt was added to the obtained dispersion liquid, and the mixture was further subjected to ultrasonic dispersion for 30 minutes.

The obtained dispersion liquid was transferred to a glass petri dish, and dried at 120°C for 2 hours in the air to obtain a film of solid electrolyte. Subsequently, the obtained film was peeled off to obtain a powdery solid electrolyte (I)-2. Various evaluations were performed on the solid electrolyte (I)-2 in the air in the same manner as in Reference Example 1. The results are summarized in the tables below.

[Reference Example 3: production by steps 1B to 3B and method 3 described above]

Using a ball mill (manufactured by FRITSCH, planetary ball mill P-7), powdery $Li_2B_4O_7$ (LBO powder) (manufactured by RARE METALLIC Co., Ltd.) was subjected to ball milling under the following conditions, pot: YSZ (45 mL), pulverization ball: YSZ (average particle diameter: 5 mm, weight: 70 g), rotation speed: 530 revolutions per minute (rpm), amount of LBO powder: 4.2 g, atmosphere: air, and treatment time of ball milling: 100 hours, thereby obtaining a fine substance of a lithium-containing oxide.

The obtained fine substance of the lithium-containing oxide was added to water such that a concentration of the fine substance was 42% by mass, and the mixture was subjected to ultrasonic dispersion for 60 minutes to obtain a dispersion liquid 1.

Next, 3.25 g of LiFSI (chemical formula: $Li(FSO_2)_2N$) as a lithium salt was added to water such that a concentration was 87% by mass, and the mixture subjected to an ultrasonic treatment for 60 minutes to obtain a solution 2.

The obtained dispersion liquid 1 and solution 2 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (I)-3. The obtained powder was allowed to stand in the air for a certain period of time, and various evaluations were performed in the air in the same manner as in Reference Example 1 using the solid electrolyte (I)-3. The results are summarized in the tables below.

[Reference Example 4: production by steps 1B to 3B and method 3 described above]

A dispersion liquid 3 was obtained in the same manner as in the preparation of the dispersion liquid 1 in Reference Example 3.

Next, 2.32 g of LiFSI (chemical formula: $Li(FSO_2)_2N$) as a lithium salt was added to water such that a concentration was 87% by mass, and the mixture subjected to an ultrasonic treatment for 60 minutes to obtain a solution 4.

The obtained dispersion liquid 3 and solution 4 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (I)-4. The obtained powder was allowed to stand in the air for a certain period of time, and various evaluations were performed in the air in the same manner as in Reference Example 1 using the solid electrolyte (I)-4. The results are summarized in the tables below.

[Reference Example 5: production by steps 1B to 3B and method 3 described above]

A dispersion liquid 5 was obtained in the same manner as in the preparation of the dispersion liquid 1 in Reference Example 3.

Next, 4.65 g of LiFSI (chemical formula: $Li(FSO_2)_2N$) as a lithium salt was added to water such that a concentration was 87% by mass, and the mixture subjected to an ultrasonic treatment for 60 minutes to obtain a solution 6.

The obtained dispersion liquid 5 and solution 6 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (I)-5. Various evaluations were performed in the air in the same manner as in Reference Example 1 using the obtained powdery solid electrolyte (I)-5 as soon as possible. The results are summarized in the tables below.

[Reference Example 6: production by steps 1B to 3B and method 3 described above]

A dispersion liquid 7 was obtained in the same manner as in the preparation of the dispersion liquid 1 in Reference Example 3.

Next, 7.13 g of LiTFSI (chemical formula: $Li(F_3CSO_2)_2N$) as a lithium salt was added to water such that a concentration was 87% by mass, and the mixture subjected to an ultrasonic treatment for 60 minutes to obtain a solution 8.

The obtained dispersion liquid 7 and solution 8 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (I)-6. The obtained powder was allowed to stand in the air for a certain period of time, and various evaluations were performed in the air in the same manner as in Reference Example 1 using the solid electrolyte (I)-6. The results are summarized in the tables below.

In Reference Example 6, the carbon amount shown in Table 1 below was estimated from the analytical mass of sulfur in consideration of the amount of each of atoms in the lithium salt.

[Comparative Reference Example 1]

As a result of performing the element analysis on the LBO powder used in Reference Example 1 (powdery $Li_2B_4O_7$ crystals not subjected to the ball milling), the composition of the obtained LBO powder was $Li_{1.96}B_{4.00}O_{6.80}$. The LBO powder was subjected to powder compaction molding at an effective pressure of 220 MPa at room temperature (27°C) to obtain a compacted powder body C1 for comparative reference. The ion conductivity of the obtained compacted powder body C1 could not be detected.

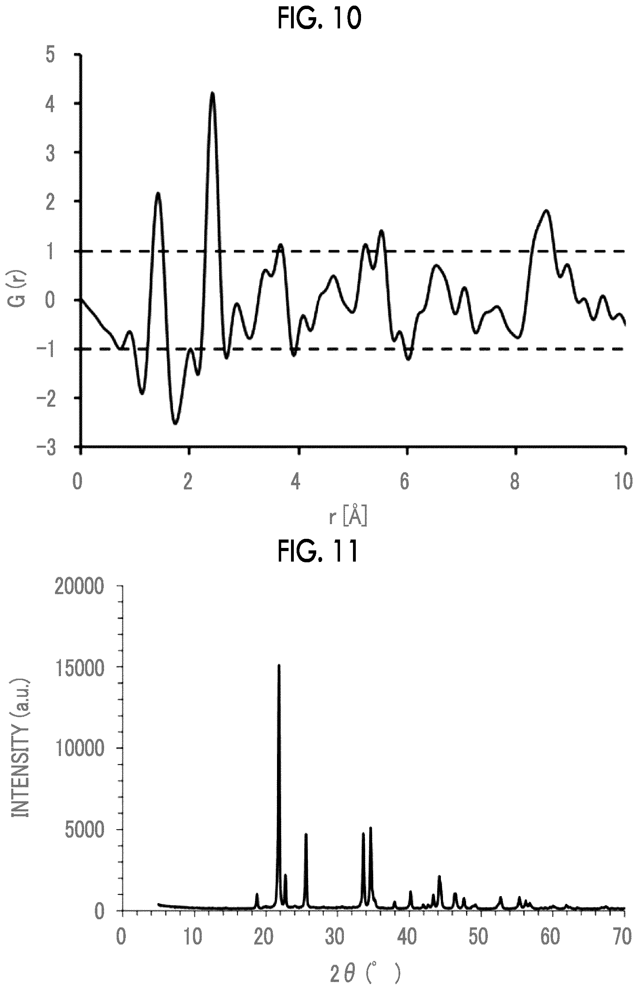

In addition, in the same manner as in Reference Example 1, the X-ray total scattering measurement was performed using the LBO powder to obtain a reduced pair distribution function G(r). Fig. 10 shows the reduced pair distribution function G(r) obtained from the LBO powder.

As a result of analysis, in the reduced pair distribution function G(r) of the LBO powder obtained from the X-ray total scattering measurement, a first peak (corresponding to the B-O proximity) in which a peak top was located at 1.40 Å and a second peak (corresponding to the B-B proximity) in which a peak top was located at 2.40 Å were present, and both of G(r) of the peak top of the first peak and G(r) of the peak top of the second peak were 1.0 or more (see Fig. 10). In addition, other peaks in which peak tops were located at 3.65 Å, 5.22 Å, 5.51 Å, and 8.54 Å were present, and the absolute value of G(r) of the peak top of each of the peaks was clearly more than 1.0 (see Fig. 10).

The LBO powder of Comparative Reference Example 1 was subjected to X-ray diffraction measurement using a CuKα ray. The measurement conditions were set to 0.01 °/step and 3 °/min.

Fig. 11 shows an X-ray diffraction pattern of the LBO powder of Comparative Reference Example 1. As shown in Fig. 11, a plurality of peaks having a small width were observed in the LBO powder used in Comparative Reference Example 1. More specifically, the strongest peak corresponding to (1,1,2) plane was observed at a position of 21.78° in terms of the 2θ value. Other major diffraction peaks observed were a peak corresponding to (2,0,2) plane at a position of 25.54°, a peak corresponding to (2,1,3) plane at a position of 33.58°, and a peak corresponding to (3,1,2) plane at a position of 34.62°; and intensities of these three peaks were substantially the same. These peaks were derived from the crystalline component.

[Comparative Reference Example 2]

As a result of the element analysis of the fine substance of the lithium-containing oxide (powdery $Li_2B_4O_7$ crystals subjected to ball milling) prepared in Reference Example 1, the composition of the fine substance of the lithium-containing oxide was $Li_{1.94}B_{4.00}O_{6.80}$.

Next, the above-described fine substance of the lithium-containing oxide was subjected to powder compaction molding at an effective pressure of 220 MPa at 27°C (room temperature) to obtain a compacted powder body (compact powder body R1) for comparative reference. The ion conductivity of the obtained compacted powder body R1 was $7.5 \times 10^{-9}$ S/cm at 27°C and $7.5 \times 10^{-8}$ S/cm at 60°C.

In the column of "Short distance G(r)" of the tables below, with regard to the reduced pair distribution function G(r) of the solid electrolyte (I) obtained from an X-ray total scattering measurement as described above, a case where a first peak in which a peak top was located in a range where r is 1.43 ± 0.2 Å and a second peak in which a peak top was located in a range where r is 2.40 ± 0.2 Å were present, and both G(r) of the peak top of the first peak and G(r) of the peak top of the second peak were more than 1.0 is indicated by "A", and other cases are indicated by "B".

In Reference Examples 1 to 5 and 9 to 13 shown in the tables below, the value of G(r) of the peak top of the first peak was 1.2 or more.

In addition, in the column of "Long distance G(r)", with regard to the above-described reduced pair distribution function G(r), a case where the absolute value of G(r) was less than 1.0 in a range where r was more than 5 Å and 10 Å or less is indicated by "A", and a case where the absolute value of G(r) was not less than 1.0 is indicated by "B".

In addition, as a result of the above-described X-ray diffraction characteristics using a CuKα ray, a case where the above-described X-ray diffraction characteristics were satisfied was indicated by "A", and a case where the above-described X-ray diffraction characteristics were not satisfied was indicated by "B". In Reference Examples 1 to 6 and 7 to 13 shown in the tables below, in the X-ray diffraction pattern, none of the first peak, the second peak, the third peak, and the fourth peak were present, or the intensity ratio of at least one peak of the first peak, the second peak, the third peak, or the fourth peak was 2.0 or less.

In the tables below, the column of "Element analysis" indicates the molar content amount of each element as a relative value in which the content of B was set to "4.00", in the composition of the solid electrolyte (I) obtained in each of Reference Examples and the lithium-containing oxide in each of Comparative Reference Examples.

In the tables below, a blank means that the corresponding element was not contained.

In the tables below, "Proportion of full-width at half maximum (%)", "Coefficient of determination", and "Mass reduction rate (%)" are as described above in Reference Example 1.

In the tables below, "Proportion of area intensity" is a proportion of the area intensity of the second peak to the area intensity of the first peak in the above-described solid $^7$Li-NMR measurement, and the evaluation results based on the following standards are described.

<Standard for proportion of area intensity>

A: case where the proportion of the area intensity was 15% or more

B: case where the proportion of the area intensity was 0.5% or more and less than 15%

C: case where the proportion of the area intensity was less than 0.5%

In the tables below, the column of "Maximum absorption intensity ratio" indicates whether or not the above-described infrared absorption spectral characteristics were satisfied; and a case where [Maximum absorption intensity in wave number range of 3000 to 3500 cm$^{-1}$]/[Maximum absorption intensity in wave number range of 800 to 1600 cm$^{-1}$] was 0.20 or more is indicated by "A", and a case of being less than 0.20 is indicated by "B".

In the tables below, "-" means that the measured value is not obtained.

[Table 1]

|  | Element composition of solid electrolyte | | | | | | |
|---|---|---|---|---|---|---|---|
|  | Li | B | O | F | s | N | C |
| Reference Example 1 | 1.94 | 4.00 | 10.66 | 0.03 | 0.02 | 0.01 | |
| Reference Example 2 | 2.04 | 4.00 | 11.09 | 0.06 | *0.05* | 0.02 | |
| Reference Example 3 | 2.70 | 4.00 | 20.90 | 1.36 | 1.38 | 0.69 | |
| Reference Example 4 | 2.50 | 4.00 | 19.90 | 0.95 | 0.98 | 0.49 | |
| Reference Example 5 | 3.00 | 4.00 | 17.10 | 1.95 | 1.98 | 0.99 | |
| Reference Example 6 | 2.90 | 4.00 | 21.45 | 5.00 | 1.90 | 0.95 | 1.90 |
| Comparative Reference Example 1 | 1.96 | 4.00 | 6.80 | | | | |
| Comparative Reference Example 2 | 1.94 | 4.00 | 6.80 | | | | |

[Table 2]

| | Proportion of full-width at half maximum (%) | Proportion of area intensity | Maximum absorption intensity ratio | Coefficient of determination | **Mass reduction** rate (%) | Short distance G(r) | Long distance G(r) | X-ray diffraction characteristics | Ion conductivity (S/cm) | |
|---|---|---|---|---|---|---|---|---|---|---|
| | | | | | | | | | 27°C | 60°C |
| Reference Example 1 | 33 | B | A | 0.9974 | 29.8 | A | A | A | $1.5 \times 10^{-4}$ | $4.0 \times 10^{-4}$ |
| Reference Example 2 | - | A | A | 0.9908 | 30 | A | - | A | $1.1 \times 10^{-3}$ | $4.0 \times 10^{-3}$ |
| Reference Example 3 | - | A | A | - | - | A | A | A | $4.7 \times 10^{-3}$ | - |
| Reference Example 4 | - | A | A | - | - | A | - | A | $4.1 \times 10^{-3}$ | - |
| Reference Example 5 | - | A | A | - | - | A | - | A | $3.0 \times 10^{-3}$ | - |
| Reference Example 6 | - | B | A | - | - | - | - | A | $7.4 \times 10^{-4}$ | - |
| Comparative Reference Example 1 | 100 | C | B | 0.1660 | 0.2 | A | B | B | Undetectable | Undetectable |
| Comparative Reference Example 2 | 46 | C | B | 0.9677 | - | A | A | A | $7.5 \times 10^{-9}$ | $7.5 \times 10^{-8}$ |

As shown in the above tables, it was found that the solid electrolytes (I)-1, (I)-2, (I)-3, (I)-4, (I)-5, and (I)-6 of Reference Examples 1 to 6 had desired characteristics or physical properties, and had excellent ion conductivity. In addition, from the results of the element analysis, it was found that the content of Li in the solid electrolyte was higher in Reference Examples 3 to 6. In Reference Examples 3 to 6, the aqueous dispersion liquid containing the lithium-containing oxide subjected to the mechanical milling treatment and the aqueous solution containing the lithium salt were mixed (the method 3 in the step 2B described above), and it is presumed that a larger amount of the lithium salt can be mixed, and as a result, the amount of Li incorporated into the solid electrolyte is increased. In addition, it was also found that the ion conductivity was further improved in Reference Examples 3, 4, and 5, in which LiFSI was used as the lithium salt. This is presumed to be because the increased Li includes Li having high mobility.

<Influence of water in solid electrolyte>

The compacted powder body (pellet) (10 mm$\varphi$, 0.9 mmt (thickness)) of the solid electrolyte (I)-3 obtained in Reference Example 3 was vacuum-dried at 27°C under a restraint of 60 MPa, and a pressure change and an ion conductivity with respect to a vacuum drying time were examined. The method of producing the compacted powder body and the evaluation of the ion conductivity are as described above, except that the In electrode is changed to the Ti electrode. The results are shown in Table 3.

[Table 3]

| Vacuum drying time (min) | Pressure (Pa) | Ion conductivity (27°C, S/cm) |
|---|---|---|
| 0 | 101325 | $4.8 \times 10^{-3}$ |
| 5 | 200 | $3.8 \times 10^{-3}$ |
| 20 | 20 | $3.3 \times 10^{-3}$ |
| 50 | 10 | $2.6 \times 10^{-3}$ |
| 1080 | 15 | $5.7 \times 10^{-4}$ |

In the solid electrolyte (I)-3 of Reference Example 3, an absorption intensity derived from an O-H stretching peak was strongly observed in a wave number range of 3,000 to 3,500 $cm^{-1}$ in the infrared absorption spectrum, and thus it is considered that a large number of OH groups and water were present. In addition, it is presumed that water was present as free water and bound water. In the above, the pellets were dried under conditions that the pellets were considered to be volatilized from the free water by vacuum drying first, and the pellets were further dried under more severe drying conditions; and the ion conductivity in each stage was evaluated.

As shown in the above table, it is considered that the pressure was 200 Pa and the free water was in a vaporized state in a drying time of 5 minutes, but the ion conductivity was a high value of $3.8 \times 10^{-3}$ S/cm, and even in a drying time of 1,080 minutes and a pressure of 15 Pa, the ion conductivity was $5.7 \times 10^{-4}$ S/cm. This result indicates that bound water other than free water was present and contributed to the ion conductivity.

[Reference Example 7: production by steps 1B to 3B and method 3 described above]

A dispersion liquid 9 in which the concentration of the fine substance of the lithium-containing oxide was 42% by mass was obtained in the same manner as in the preparation of the dispersion liquid 1 in Reference Example 3 described above.

Next, 7.12 g of LiTFSI (chemical formula: $Li(F_3CSO_2)_2N$) as a lithium salt was added to water such that a concentration was 87% by mass, and the mixture subjected to an ultrasonic treatment for 60 minutes to obtain a solution 10.

The obtained dispersion liquid 9 and solution 10 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (I)-7. The obtained powder was allowed to stand in the air for a certain period of time, and various evaluations were performed in the air in the same manner as in Reference Example 1 using the solid electrolyte (I)-7. The results are summarized in the tables below.

[Reference Example 8]

A solid electrolyte (I)-8 was obtained in the same manner as in Reference Example 7, except that the content of water and LiTFSI in the obtained solid electrolyte (I) was changed to the amount shown in the table below; and various evaluations were performed in the air in the same manner as in Reference Example 1. The results are summarized in the tables below.

[Reference Examples 9 to 13]

Solid electrolytes (I)-9 to (I)-13 were obtained in the same manner as in Reference Example 7, except that LiTFSI was changed to LiFSI, and the content of water and LiFSI in the obtained solid electrolyte (I) was changed to the amount shown in the table below; and various evaluations were performed in the air in the same manner as in Reference Example 1. The results are summarized in the tables below. However, in Reference Example 13, the evaluation was performed in the air using the powder obtained by vacuum drying as soon as possible.

In the tables below, the columns of "Fine substance of lithium-containing oxide", "Lithium salt", and "Water" indicate relative molar ratios. For example, in Reference Example 7, the molar ratio of the lithium salt to the fine substance of the lithium-containing oxide was 1, and the molar ratio of the water to the fine substance of the lithium-containing oxide was 11. The above-described molar ratio was calculated by the following method.

Regarding the analysis of each of elements, quantitative analysis was performed by ICP-OES for lithium and boron or by combustion ion chromatography (combustion IC) for fluorine and sulfur, estimation was performed for N from the analytical mass of sulfur in consideration of the amount of each of atoms in the Li salt, the analytical masses of elements other than O were added together for O, and calculation was performed in terms of the difference from the total amount of the solid electrolyte. In Reference Examples 7 and 8, the carbon amount was estimated from the analytical mass of sulfur in consideration of the amount of each of atoms in the lithium salt. The molar ratio of the fine substance of the lithium-containing oxide in the solid electrolyte to the lithium salt was calculated from the molar ratio of an element (for example, B) which is present only in the fine substance of the lithium-containing oxide to an element which is present only in the lithium salt. In addition, the molar ratio of the fine substance of the lithium-containing oxide to the water was calculated by subtracting the molar ratio of O, contained in the fine substance of the lithium-containing oxide and the lithium salt, from the molar ratio of O in the solid electrolyte to calculate the molar amount of O derived from water, and using the obtained molar amount of O derived from water and the molar amount of the fine substance of the lithium-containing oxide.

[Table 4]

|  | Fine substance of the lithium-containing oxide | Lithium salt | Water |
| --- | --- | --- | --- |
| Comparative Reference Example 2 | 1 | 0 | 0 |
| Reference Example 7 | 1 | 1 | 11 |
| Reference Example 8 | 1 | 1.2 | 11 |
| Reference Example 9 | 1 | 0.01 | 4 |
| Reference Example 10 | 1 | 0.03 | 4 |
| Reference Example 11 | 1 | 0.5 | 11 |
| Reference Example 12 | 1 | 0.7 | 11 |
| Reference Example 13 | 1 | 1.0 | 6 |

In addition, the content (% by mass) of each component in the solid electrolyte (I) was calculated based on the molar amount and the molecular weight shown in Table 4. The results are shown in Table A.

[Table A]

|  | Fine substance of the lithium-containing oxide | Lithium salt | Water |
| --- | --- | --- | --- |
| Comparative Reference Example 2 | 100 | 0 | 0 |
| Reference Example 7 | 26 | 44 | 30 |
| Reference Example 8 | 24 | 48 | 28 |
| Reference Example 9 | 70 | 1 | 29 |
| Reference Example 10 | 69 | 2 | 29 |
| Reference Example 11 | 37 | 20 | 43 |
| Reference Example 12 | 34 | 26 | 40 |

(continued)

|  | Fine substance of the lithium-containing oxide | Lithium salt | Water |
|---|---|---|---|
| Reference Example 13 | 36 | 40 | 24 |

[Table 5]

| | Proportion of full-width at half maximum (%) | Proportion of area intensity | Maximum absorption intensity ratio | Coefficient of determination | Mass reduction rate (%) | Short distance G(r) | Long distance G(r) | X-ray diffraction characteristics | Ion conductivity (S/cm) | |
|---|---|---|---|---|---|---|---|---|---|---|
| | | | | | | | | | 27°C | 60°C |
| Comparative Reference Example 2 | 46 | C | B | 0.9677 | - | A | A | A | $7.5 \times 10^{-9}$ | $7.5 \times 10^{-8}$ |
| Reference Example 7 | - | B | A | - | - | - | - | A | $7.4 \times 10^{-4}$ | - |
| Reference Example 8 | - | B | A | - | - | - | - | A | $7.2 \times 10^{-4}$ | - |
| Reference Example 9 | 33 | B | A | 0.9974 | 29.8 | A | - | A | $1.5 \times 10^{-4}$ | $4.0 \times 10^{-4}$ |
| Reference Example 10 | - | A | A | 0.9908 | 30 | A | - | A | $1.1 \times 10^{-3}$ | $4.0 \times 10^{-3}$ |
| Reference Example 11 | - | A | A | - | - | A | - | A | $4.1 \times 10^{-3}$ | - |
| Reference Example 12 | - | A | A | - | - | A | - | A | $4.7 \times 10^{-3}$ | - |
| Reference Example 13 | - | A | A | - | - | A | - | A | $3.0 \times 10^{-3}$ | - |

As shown in the above tables, the solid electrolyte of each of Reference Examples satisfied the composition specified in the claim 1 of the present application, had desired characteristics or physical properties, and exhibited excellent ion conductivity.

[Production Example 1] Production of all-solid-state secondary battery

A solid electrolyte having a specific composition specified in claim 1 was prepared separately from Reference Examples 1 to 13, and the recovery of the active material from the all-solid-state secondary battery using the solid electrolyte was attempted.

<Preparation of solid electrolyte slurry: production of solid electrolyte (I) by steps 1B to 3B and method 1 described above>

(Preparation of fine substance of lithium-containing oxide)

45 g of powdery $Li_2B_4O_7$ crystals (LBO powder) (manufactured by RARE METALLIC Co., Ltd.), 770 g of zirconia beads (average particle diameter: 5 mm), and 3 mL of water were charged into a 500 mL zirconia pot, and the pot was sealed with a ring made of Teflon (registered trademark) and a lid made of zirconia. Using a planetary ball milling device (P-7, manufactured by FRITSCH), the mixture was subjected to a ball milling treatment at 300 revolutions per minute (rpm) for 45 hours to pulverize the LBO powder, thereby obtaining a fine substance of a lithium-containing oxide.

(Preparation of solid electrolyte (I))

10 g of the obtained $Li_2B_4O_7$ powder, 15 g of water, and 11 g of $Li(FSO_2)_2N$ (LiFSI) were mixed in a beaker, and subjected to an ultrasonic treatment for 30 minutes using an ultrasonic cleaner to obtain a dispersion liquid. The dispersion liquid was further stirred with a magnetic stirrer for 30 minutes to obtain a solid electrolyte slurry.
The solid electrolyte slurry was vacuum-dried at 40°C and 20 Pa for 15 hours to obtain a powder. After storing the obtained powder in a desiccator (humidity: 5%) for several days and then analyzing in the air, it was confirmed that the powder had the above-described X-ray diffraction characteristics and was in an amorphous state. In addition, in a case where the ion conductivity was measured by the above-described method, the ion conductivity was $4.5 \times 10^{-3}$ S/cm. In addition, the value of the ratio of the content of LiFSI to the content of the lithium-containing oxide was 1 in terms of a molar ratio; and the value of the ratio of the content of water to the content of the lithium-containing oxide was 9 in terms of a molar ratio. The element composition was Li = 3, B = 4, O = 20, F = 2, S = 2, and N = 1. The solid electrolyte produced in Production Example 1 satisfied the above-described characteristics in the same manner as the solid electrolyte (I) of Reference Example 1.

<Preparation of positive electrode slurry>

5.0 g of $LiCoO_2$ (LCO; volume average particle size: 12 $\mu$m, density: 4.92 g/cm$^3$) as a positive electrode active material and 4.8 g of a 6% aqueous dispersion liquid of carbon nanotubes (CNT) (manufactured by KJ Special Paper Co., Ltd.) as a conductive auxiliary agent were added to 5.2 g of the above-described solid electrolyte slurry, and the mixture was stirred with a magnetic stirrer for 30 minutes to obtain a positive electrode slurry.

<Preparation of negative electrode slurry>

5.0 g of $TiNb_2O_7$ (TNO; volume average particle size: 3 $\mu$m, density: 4.11 g/cm$^3$) as a negative electrode active material and 9.8 g of a 6% aqueous dispersion liquid of carbon nanotubes (CNT) (manufactured by KJ Special Paper Co., Ltd.) as a conductive auxiliary agent were added to 7.6 g of the above-described solid electrolyte slurry, and the mixture was stirred with a magnetic stirrer for 30 minutes to obtain a negative electrode slurry.

<Production of positive electrode-side laminate [solid electrolyte layer/positive electrode active material layer/Al collector]>

The above-described positive electrode slurry was applied onto an A4-sized Al foil having a thickness of 50 $\mu$m using a desktop coating machine at an applicator gap of 100 $\mu$m and an application speed of 30 mm/s. After being left to stand at room temperature for 1 hour, the above-described solid electrolyte slurry was applied onto a positive electrode slurry coating film in a multilayer manner using a desktop coating machine at an applicator gap of 200 $\mu$m and a coating rate of 90 mm/s. The multilayer coating film was stored in a desiccator having a relative humidity of 5% or less for 12 hours and dried, and punched with a hand punch to have a diameter of 10 mm, thereby obtaining a positive electrode-side laminate (solid electrolyte layer/positive electrode active material layer/Al collector).

<Preparation of negative electrode-side laminate [solid electrolyte layer/negative electrode active material layer/Al collector]>

The above-described negative electrode slurry was applied onto an A4-sized Al foil having a thickness of 50 $\mu$m using a desktop coating machine at an applicator gap of 200 $\mu$m and an application speed of 30 mm/s. After being left to stand at room temperature for 1 hour, the above-described solid electrolyte slurry was applied onto a negative electrode slurry coating film in a multilayer manner using a desktop coating machine at an applicator gap of 300 $\mu$m and a coating rate of 90 mm/s. The multilayer coating film was stored in a desiccator having a relative humidity of 5% or less for 12 hours and dried, and punched with a hand punch to have a diameter of 10 mm, thereby obtaining a negative electrode-side laminate (solid electrolyte layer/negative electrode active material layer/Al collector).

The positive electrode-side laminate and the negative electrode-side laminate were produced under a pressure of $1.0 \times 10^5$ Pa.

<Production of all-solid-state secondary battery>

The above-described negative electrode-side laminate was placed on a 10 mm-diameter SUS base of an all-solid-state battery evaluation cell (product name: KP-SolidCell) manufactured by Hohsen Corp. with the solid electrolyte layer side facing upward, and the positive electrode-side laminate obtained above was further placed thereon with the solid electrolyte layer side facing downward. In this way, a laminate having a structure of positive electrode-side laminate/-negative electrode-side laminate (this laminate is referred to as a cell) was obtained.

Next, a tube made of Teflon (registered trademark) (hereinafter, also referred to as a Teflon tube) having an inner diameter of 10.2 mm was fitted from the positive electrode collector side of the cell, and a polished Ti plate having a diameter of 10 mm and a thickness of 2 mm was inserted from a hole in the upper part of the Teflon tube to superimpose the polished Ti plate on the positive electrode laminate. Furthermore, a Ti rod having a diameter of 10 mm and a height of 2 cm was placed on the polished Ti plate.

Next, one particle of silica gel for water removal was placed in the cavity of the KP-SolidCell, and the upper housing of the KP-SolidCell was fitted and sealed using a double O-ring, a 4-point bolt, and a butterfly nut. The cell was restrained from above and below by a restraining pressure applying mechanism provided on the upper part of the KP-SolidCell at a torque of 5 Nm (corresponding to 30 MPa).

Next, the KP-SolidCell was temporarily opened to take out the cell, the excess liquid component which had bleed out due to the application of the restraining pressure was wiped off, and the cell was set in the KP-SolidCell again in the same manner as described above, and restrained from above and below (restraining pressure: 5 Nm torque (corresponding to 30 MPa)).

Next, the upper lid was opened, and the entire KP-SolidCell was subjected to a freeze-drying treatment (10 Pa, 40°C) for 2 hours to sufficiently remove moisture inside the cell. After taking out the KP-SolidCell from the vacuum dryer, the upper lid was closed and sealed through a double O-ring. After being left to stand for 40 hours, the cell was heated (post-baked) at 80°C for 2 hours to produce an all-solid-state secondary battery.

The positive electrode active material layer in the all-solid-state secondary battery contained 31% by mass of the oxide-based solid electrolyte, 67% by mass of LCO, and 2% by mass of CNT. In addition, the negative electrode active material layer contained 49% by mass of the oxide-based solid electrolyte, 46% by mass of TNO, and 5% by mass of CNT. In the all-solid-state secondary battery, thicknesses of the positive electrode active material layer, the solid electrolyte layer, and the negative electrode active material layer were 100 $\mu$m, 200 $\mu$m, and 100 $\mu$m, respectively.

[Example 1]

In Example 1, the positive electrode active material and the negative electrode active material were recovered in an atmospheric environment as follows, using the unused all-solid-state secondary battery produced in Production Example 1.

<Preparation of all-solid-state secondary battery member>

In the all-solid-state secondary battery produced in Production Example 1, a laminate of the positive electrode collector and the positive electrode active material layer was peeled off from an interface with the solid electrolyte layer using tweezers to obtain a positive electrode laminate. Similarly, a laminate of the negative electrode collector and the negative electrode active material layer was peeled off from an interface with the solid electrolyte layer to obtain a negative electrode laminate.

<Contact step>

Next, the positive electrode laminate or the negative electrode laminate (diameter: 10 mm, weight: 68 mg) was separately immersed in 3 mL of water (water temperature: 26°C) in a beaker, and subjected to an ultrasonic treatment for 3 minutes using an ultrasonic cleaner. In this way, the contact step was performed, and as a result, the oxide-based solid electrolyte in the positive electrode active material layer or the negative electrode active material layer was eluted into water, and the active material and the conductive auxiliary agent were dispersed in water. In the contact step, the positive electrode collector and the negative electrode collector peeled off from each of the active material layers were taken out.

<Solid-liquid separation step>

A treated liquid obtained by bringing the positive electrode laminate into contact with water was subjected to suction filtration using a filter paper (manufactured by Whatman International Ltd.) having a particle retention capacity smaller than the volume average particle size (particle size distribution) of LCO, and the filter cake was washed with ultrapure water to obtain LCO. The filter paper used was a filter paper which allowed CNT to pass through. The filter cake was dried in an electric furnace set to 120°C for 2 hours together with the filter paper, thereby recovering 8.7 mg of LCO. In a case where a recovery rate of LCO was calculated according to the following expression C1 from 8.8 mg of the content of LCO in the positive electrode laminate used in the contact step and 8.7 mg of the recovered LCO, the recovery rate of LCO was 90% by mass or more.

$$\text{Expression C1: Recovery rate of LCO}$$

$$= [\text{Amount of LCO recovered (g)/LCO content in positive electrode active material}$$

$$\text{layer (g)}] \times 100 \ (\%)$$

Similarly, a treated liquid obtained by bringing the negative electrode laminate into contact with water was subjected to suction filtration using a filter paper (manufactured by Whatman International Ltd.) having a particle retention capacity smaller than the volume average particle size (particle size distribution) of TNO, and the filter cake was washed with ultrapure water to obtain TNO. The filter paper used was a filter paper which allowed CNT to pass through. The filter cake was dried in an electric furnace set to 120°C for 2 hours together with the filter paper, thereby recovering 5.9 mg of TNO. In a case where a recovery rate of TNO was calculated according to the following expression C1 from 6.5 mg of the content of TNO in the negative electrode laminate used in the contact step and 5.9 mg of the recovered TNO, the recovery rate of TNO was 90% by mass or more.

$$\text{Expression A1: Recovery rate of TNO}$$

$$= [\text{Amount of TNO recovered (g)/TNO content in negative electrode active material}$$

$$\text{layer (g)}] \times 100 \ (\%)$$

As described above, the active materials LCO and TNO could be recovered with a high recovery rate of 90% by mass or more, by a simple operation of bringing the positive electrode laminate or the negative electrode laminate into contact with water and then performing the solid-liquid separation. The LCO and TNO recovered in this way had a purity that could be used as an active material layer of the all-solid-state secondary battery.

The filtrate obtained in the solid-liquid separation step contained an oxide-based solid electrolyte, and the oxide-based solid electrolyte (the above-described lithium-containing oxide and lithium salt) could also be recovered from each filtrate as necessary.

[Example 2]

In Example 2, after the all-solid-state secondary battery produced in Production Example 1 was charged and discharged as described below, a positive electrode laminate and a negative electrode laminate were prepared in the same manner as in Example 1, and for each laminate, the contact step and the solid-liquid separation step were performed in an atmospheric environment. As a result, the positive electrode active material LOC and the negative electrode active material TNO could be recovered with a high recovery rate with the same amount as in Example 1.

<Charging and discharging of all-solid-state secondary battery>

The all-solid-state secondary battery produced in Production Example 1 was charged in an environment of 25°C at a current density of 0.8 mA/cm$^2$ until the battery voltage reached 2.8 V, and then discharged at a current density of 0.8 mA/cm$^2$ until the battery voltage reached 1.5 V. One charging operation and one discharging operation described above were set as one cycle of charging and discharging, and 100 cycles of charging and discharging were repeated under the same conditions.

In Example 2, the positive electrode laminate and the negative electrode laminate obtained from the all-solid-state secondary battery were subjected to a method of being separated and recovered, but the all-solid-state secondary battery itself could also be subjected to the method of being separated and recovered. In this case, the treated liquid obtained in the contact step could be subjected to, for example, a centrifugal separation treatment or the like, and two active materials could be separated by using a difference in density between the positive electrode active material and the negative electrode active material. In consideration of the results of Example 1 and the like, it can be understood that the two active materials could be recovered with a high recovery rate by separating each of the two active materials from the other active material at the same time as the oxide-based solid electrolyte.

The present invention has been described with the embodiments thereof, any details of the description of the present invention are not limited unless described otherwise, and it is obvious that the present invention is widely construed without departing from the gist and scope of the present invention described in the accompanying claims.

Priority is claimed on JP2022-089966 filed in Japan on June 1, 2022 and JP2022-197051 filed in Japan on December 9, 2022, the contents of which are incorporated herein by reference.

Explanation of References

1: negative electrode collector
2: negative electrode active material layer
3: solid electrolyte layer
4: positive electrode active material layer
5: positive electrode collector
6: operation portion
10: all-solid-state secondary battery

**Claims**

1.  A recovery method of an active material for recovering an active material from an all-solid-state secondary battery member including an active material layer which contains the active material and an oxide-based solid electrolyte, the method comprising:

    bring the all-solid-state secondary battery member into contact with an aqueous medium, and;
    performing solid-liquid separation,
    wherein the oxide-based solid electrolyte includes a solid electrolyte which contains a lithium-containing oxide containing Li, B, and O, a lithium salt, and water, and
    in the solid electrolyte, a value of a ratio of a content of the lithium salt to a content of the lithium-containing oxide is 0.001 to 1.5 in terms of a molar ratio, and a value of a ratio of a content of the water to the content of the lithium-containing oxide is 1 to 12 in terms of a molar ratio.

2.  The recovery method according to claim 1,
    wherein the lithium-containing oxide includes amorphous lithium tetraborate.

3.  The recovery method according to claim 1 or 2,
    wherein the solid-liquid separation after bringing the all-solid-state secondary battery member into contact with the aqueous medium is performed in an air.

4.  The recovery method according to any one of claims 1 to 3,
    wherein, by the contact, the oxide-based solid electrolyte is eluted into the aqueous medium and the active material is dispersed in the aqueous medium.

5. The recovery method according to any one of claims 1 to 4,
   wherein the active material is a positive electrode active material.

6. The recovery method according to claim 5,
   wherein the positive electrode active material is a positive electrode active material containing a rare metal element.

7. The recovery method according to any one of claims 1 to 6,

   wherein the all-solid-state secondary battery member is a member derived from a battery laminate including a positive electrode active material layer which contains a positive electrode active material and an oxide-based solid electrolyte or a negative electrode active material layer which contains a negative electrode active material and an oxide-based solid electrolyte,
   both the oxide-based solid electrolytes include a solid electrolyte which contains a lithium-containing oxide containing Li, B, and O, a lithium salt, and water, and
   in the solid electrolyte, a value of a ratio of a content of the lithium salt to a content of the lithium-containing oxide is 0.001 to 1.5 in terms of a molar ratio, and a value of a ratio of a content of the water to the content of the lithium-containing oxide is 1 to 12.

# FIG. 1

# FIG. 2

## FIG. 3

## FIG. 4

## FIG. 5

| 100 | 50 | 0 | -50 | -100 |

| 100 | 50 | 0 | -50 | -100 |

## FIG. 6

| 100 | 50 | 0 | -50 | -100 |

## FIG. 7

| 100 | 50 | 0 | -50 | -100 |

## FIG. 8

## FIG. 9

## FIG. 10

## FIG. 11

# EP 4 535 508 A1

**INTERNATIONAL SEARCH REPORT**

| International application No. |
|---|
| **PCT/JP2023/020301** |

**A. CLASSIFICATION OF SUBJECT MATTER**

*H01M 10/54*(2006.01)i; *H01M 10/36*(2010.01)i
FI: H01M10/54; H01M10/36

According to International Patent Classification (IPC) or to both national classification and IPC

**B. FIELDS SEARCHED**

Minimum documentation searched (classification system followed by classification symbols)

H01M10/54; H01M10/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2010/106618 A1 (TOYOTA JIDOSHA KABUSHIKI KAISHA) 23 September 2010 (2010-09-23) entire text, all drawings | 1-7 |
| A | JP 2016-186116 A (JX NIPPON MINING & METALS CORP) 27 October 2016 (2016-10-27) entire text, all drawings | 1-7 |
| A | JP 2021-018856 A (SUMITOMO METAL MINING CO) 15 February 2021 (2021-02-15) entire text, all drawings | 1-7 |
| A | WO 2021/157278 A1 (FUJIFILM CORPORATION) 12 August 2021 (2021-08-12) entire text, all drawings | 1-7 |
| A | US 2022/0158229 A1 (SAMSUNG ELECTRONICS CO., LTD.) 19 May 2022 (2022-05-19) entire text, all drawings | 1-7 |

☐ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 August 2023** | **22 August 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

EP 4 535 508 A1

**INTERNATIONAL SEARCH REPORT**
Information on patent family members

International application No.

**PCT/JP2023/020301**

| Patent document cited in search report | | | Publication date (day/month/year) | Patent family member(s) | | | Publication date (day/month/year) |
|---|---|---|---|---|---|---|---|
| WO | 2010/106618 | A1 | 23 September 2010 | US 2012/0091391 A1 entire text, all drawings CN 101919107 A | | | |
| JP | 2016-186116 | A | 27 October 2016 | (Family: none) | | | |
| JP | 2021-018856 | A | 15 February 2021 | (Family: none) | | | |
| WO | 2021/157278 | A1 | 12 August 2021 | US 2022/0344710 A1 entire text, all drawings KR 10-2022-0109449 A CN 114930594 A | | | |
| US | 2022/0158229 | A1 | 19 May 2022 | EP 4001213 A1 KR 10-2022-0065653 A CN 114497520 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010106618 A
- JP 2016033876 A
- JP 62022066 A
- JP S62022066 A
- JP 2006856 A
- JP H2006856 A
- JP 3045473 A
- JP H3045473 A
- JP 5090844 A
- JP H5090844 A
- JP 6004516 A
- JP H6004516 A
- JP 2022089966 A
- JP 2022197051 A